(19) Europäisches Patentamt
European Patent Office
Office européen des brevets

(11) EP 0 930 320 A1

(12) **EUROPEAN PATENT APPLICATION**
published in accordance with Art. 158(3) EPC

(43) Date of publication:
**21.07.1999 Bulletin 1999/29**

(21) Application number: **98933878.5**

(22) Date of filing: **22.07.1998**

(51) Int. Cl.[6]: **C08F 210/06**, C08F 4/642, C08F 210/02, C08F 110/14, C08L 23/10, F16F 15/02

(86) International application number:
**PCT/JP98/03261**

(87) International publication number:
**WO 99/05190 (04.02.1999 Gazette 1999/05)**

(84) Designated Contracting States:
**BE DE FR GB IT NL**

(30) Priority: **22.07.1997 JP 19613197**

(71) Applicant:
**Mitsui Chemicals, Inc.**
**Tokyo 100-6070 (JP)**

(72) Inventors:
- **MORIZONO, Kenichi-Mitsui Chemicals, Inc.**
  **Yamaguchi-ken 740-0061 (JP)**
- **OKADA, Keiji-Mitsui Chemicals, Inc.**
  **Yamaguchi-ken 740-0061 (JP)**
- **YAMAGUCHI, Masayoshi-Mitsui Chemicals, Inc.**
  **Yamaguchi-ken 740-0061 (JP)**
- **MORI, Ryoji-Mitsui Chemicals, Inc.**
  **Yamaguchi-ken 740-0061 (JP)**
- **OTA, Seiji,Mitsui Chemicals, Inc.**
  **Yamaguchi-ken 740-0061 (JP)**

(74) Representative: **HOFFMANN - EITLE**
**Patent- und Rechtsanwälte**
**Arabellastrasse 4**
**81925 München (DE)**

# (54) ETHYLENE/ALPHA-OLEFIN COPOLYMERS, COMPOSITIONS, AND PROCESSES FOR THE PREPARATION OF THE COPOLYMERS AND THE COMPOSITIONS

(57) The present invention relates to a process for manufacturing atactic ethylene/α-olefin copolymers, atactic ethylene/α-olefin copolymers, and compositions thereof and the process for manufacturing such compositions.

The ethylene/propylene copolymers of the present invention comprise ethylene and propylene whose structural molar ratio (ethylene/propylene) is 1/99 to 20/80 and out of the spectra in the zone (19 to 23 ppm) obtained by $^{13}$CNMR measurement, the areas of the signals appearing in the first zone (21.1 to 21.9 ppm), second zone (20.3 to 21.0 ppm) and third zone (19.5 to 20.3 ppm) have a specific proportion.

Fig. 1

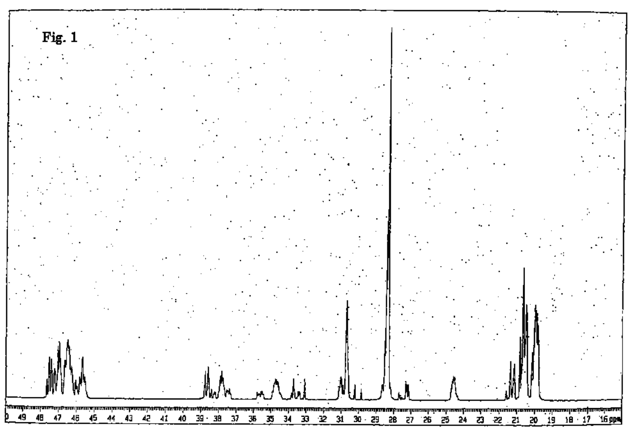

EP 0 930 320 A1

## Description

### TECHNICAL FIELD

The present invention relates to a method for manufacturing atactic ethylene/α-olefin copolymers, atactic ethylene/propylene copolymers obtained therefrom, and compositions thereof and the method for manufacturing such compositions. More specifically, the object of the present invention is to provide ethylene/α-olefin copolymers having excellent optical properties, mechanical properties and/or film properties, and the present invention relates to an effective manufacturing method therefor, compositions thereof and a method for manufacturing such compositions by a polymerization process.

### TECHNICAL BACKGROUND

Olefin polymers such as ethylene polymer and propylene polymer are used in many fields such as various moldings because of their excellent rigidity, heat resistance, impact resistance and other properties. Moreover, olefin polymers are used for various applications such as various films because of their excellent transparency and flexibility.
As a method for improving the impact resistance of these olefin polymers, a method is known, for example, in which after homopolymerizing propylene, propylene and ethylene are copolymerized to produce block copolymer.
The Laid-open Patent Publication HEI 4-337308 discloses a block copolymer manufacturing method in which in the presence of a transition metal compound using cyclopentadienyl crosslinked with the silylene group and an organoaluminum compound, a propylene homopolymer or a propylene copolymer containing the ethylene unit at a ratio of less than 6 wt% is first polymerized until its content becomes 40 to 95 wt% of the total polymer ultimately obtained, and then the ethylene and propylene at a ratio by weight of 10/90 to 95/5 are polymerized so that the ethylene and propylene content is 60 to 5 wt% of the total polymer ultimately obtained. It is stated in the Laid-open Patent Publication that the block copolymer obtained by this method shows a good balance between impact resistance and rigidity.
Furthermore, the Laid-open Patent Publication HEI 5-202152 disclosed a method for manufacturing a polypropylene molding material which comprises carrying out the polymerization of an amorphous ethylene-propylene copolymer by use of a specified crosslinking metallocene compound and aluminoxane in manufacturing, in the presence of a transition metal compound and an organoaluminum compound, a polypropylene molding material comprising (1) 20 to 99 wt% crystalline polymer having a propylene unit content of not less than 95 wt% and (2) 1 to 80 wt% amorphous ethylene-propylene copolymer having an ethylene unit content of 20 to 90 wt%. It is also stated in HEI 5-202152 that the polypropylene molding material obtained by this method has especially excellent low-temperature impact strength.
Blending elastomer with polypropylene is also known as a method for improving the impact strength of olefin polymer. However, since such polypropylene with which elastomer is blended has inferior optical properties such as transparency, it has found a limited range of uses.
Moreover, blending atactic polypropylene with polypropylene with the objective of improving properties of polypropylene is described in Laid-open Patent Publication HEI 6-263934, for example.
In recent years, there has been an increasingly severer demand for the physical properties of olefin polymers such as polypropylene, and it is desired that those olefin polymers and compositions which have much better properties and a method for manufacturing such olefin polymers will come into existence.
For a specific example, as the result that consumers' demand for better taste has grown, it is earnestly hoped in the field of film that the film will make the long-term storage of vegetables, meats, fish and shellfish, etc. and the retention of freshness thereof possible. However, the film of conventional olefin polymer showed poor carbon dioxide, oxygen gas and water vapor permeability and consequently was not retain adequately the freshness of vegetables absorbing much of them in summer season.
The objects of the present invention are not only to provide a method for manufacturing ethylene/-α-olefin copolymers having excellent optical, mechanical and/or film properties and particular ethylene/α-olefin copolymers and compositions thereof but also to provide a manufacturing method in which such poly-α-olefin polymers are made atactic and a method for manufacturing such compositions by a polymerization process.

### SUMMARY OF THE INVENTION

One embodiment of the present invention relates to a method for manufacturing an atactic ethylene/α-olefin copolymers by using a particular catalyst.
A second embodiment of the present invention relates to ethylene/propylene copolymers comprising ethylene and propylene wherein the structural molar ratio (ethylene/propylene) is 1/99 to 20/80 and out of the spectra in the zone (19 to 23 ppm) obtained by C13NMR measurement, the areas of the signals appearing in the first zone (21.1 to 21.9 ppm), second zone (20.3 to 21.0 ppm) and third zone (19.5 to 20.3 ppm) are represented by the total peak area in the

first zone = $P^1$, the total peak area in the second zone = $P^2$ and the total peak area in the third zone = $P^3$, respectively, and X and Y are defined by the formulas, $P^1/(P^1+P^2+P^3)=X$ and $P^3/(P^1+P^2+P^3)=Y$, respectively, and X is $0<X<30$ and Y is $0<Y<53$.

A third embodiment of the present invention relates to compositions of such particular ethylene/propylene copolymer and an isotactic polyolefin resin.

A forth embodiment of the present invention relates to a process for preparing the compositons by at least two types of catalyst.

Among the poly-α-olefin polymers of the present invention is an atactic polymer obtained by polymerizing ethylene and one or more an α-olefin monomers having 3 to 10 carbon atoms as a preferable embodiment.

The α-olefin of the aforementioned embodiment is preferably a combination of ethylene and an α-olefin monomer having 3 to 10 carbon atoms, and it is desirable that their structural molar ratio (ethylene/α-olefin having 3 to 10 carbon atoms) should be in a range of 40/60 to 1/99. Moreover, especially, the α-olefin may be in a combination of ethylene and an α-olefin monomer (A) having 3 to 10 carbon atoms and an α-olefin monomer (B) having 3 to 6 carbon atoms, which is other than (A), and it is desirable that the structural molar ratio [(ethylene + A)/B] should be in a range of 40/60 to 1/99. It is also desirable that the mr/(mm + rr) value in the diad distribution of each α-olefin as measured by NMR should be in a range of 0.7 to 1.3, the intrinsic viscosity [η], in a range of 0.5 to 10 dl/g, and the degree of crystallization, not more than 5%.

Poly-α-olefin polymers like this embodiment have satisfactory optical, mechanical and/or film properties.

The α-olefin polymers of the present invention may be manufactured by the catalyst system shown below.

Specifically, the catalyst system is preferably a catalyst system comprising (a) shown below as the essential component and at least one compound selected from among (b) to (d) shown below.

(a) the transition metal complex represented by the following formula(I):

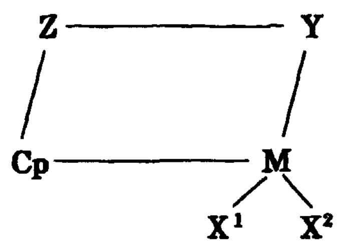

(I)

(wherein M stands for Ti • Zr • Hf, Cp stands for the cyclopentadienyl group, indenyl group, fluorenyl group or their derived groups which is π-bonded with M, $X^1$ and $X^2$ stands for an anionic ligand or a neutral Lewis base ligand, Y stands for a ligand containing nitrogen atom, oxygen atom, phosphor atom or sulfur atom, and Z stands for oxygen atom, silicon atom or one carbon atom.), or

The meso form of the transition metal compound represented by the following formula (II)

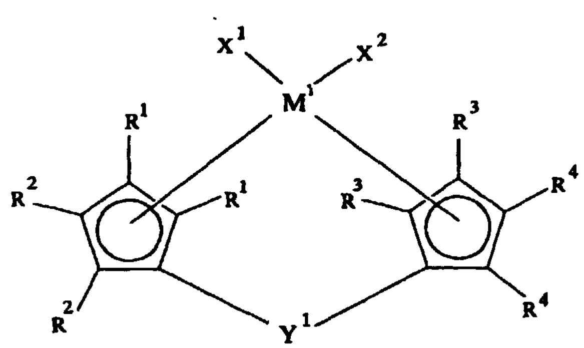

(II)

(wherein $M^1$ stands for a transition metal atom in the Group IV to VIB of the periodic table; $R^1$, $R^2$, $R^3$ and $R^4$, which may be the same or different from one another, stand for a hydrocarbon group having 1 to 20 carbon atoms, a halogenated hydrocarbon group having 1 to 20 carbon atoms, a silicon-containing group, an oxygen-containing group, a sulfur-containing group, a nitrogen-containing group, phosphor-containing group, hydrogen atom or halogen

atom, and parts of the mutually adjacent groups may be bonded to form a ring together with the carbon atoms bonded by these groups; $X^1$ and $X^2$, which may be the same or different from one another, stand for a hydrocarbon group, a halogenated hydrocarbon group, an oxygen-containing group, a sulfur-containing group, a silicon-containing group, hydrogen atom or halogen atom; and $Y^1$ stands for a bivalent hydrocarbon group, a bivalent halogenated hydrocarbon group, a bivalent silicon-containing group, a bivalent germanium-containing group, a bivalent tin-containing group, -O-, -CO-, -S-, - SO-, $-SO_2-$, -Ge-, -Sn-, $-NR^5-$, $-P(R^5)-$, $-P(O)(R^5)-$, $-BR^5$ - or $-A1R^5$ - [however, R5 may be the same or different from one another and stands for hydrogen atom, halogen atom, a hydrocarbon group, a halogenated hydrocarbon group or an alkoxy group].

(b)a compound which reacts with the transition metal M in the component (a) to form an ion pair,

(c) an organoaluminum compound, and

(d) an alumoxan.

The α-olefin polymers of the present invention themselves may be used for various uses. Furthermore, they are used in the form of compositions obtained by blending it with other thermoplastic resins such as crystalline polypropylene, crystalline polybutene, crystalline 4-methyl-1-pentene polymer, polyethylene terephthalate, polyamide and polycarbonate, for example, at various ratios. Such blending will improve the impact resistance, flexibility and other properties of those thermoplastic resins.

Particularly, a composition comprising 5 to 80 wt% of an atactic α-olefin polymer of the present invention, 10 to 80 wt% of a crystalline polyolefin polymer and, as required, 10 to 80 wt% of an elastomer has especially excellent rigidity, heat resistance and impact resistance. (The total of the atactic α-olefin polymer of the present invention, a crystalline polyolefin polymer and elastomer is 100 wt%.)

These compositions of the α-olefin polymers may be obtained by not only solution-blending each of the components and dry-blending each of the components in a melted state but also manufacturing each of the components in parallel or consecutively by parallel or series multi-stage polymerization and then by ultimately forming them into the compositions.

The manufacture of the aforementioned compositions is conducted by polymerization using at least two different catalysts in some cases. The use of at least two catalysts makes the reduction of the number of the stages of polymerization. For example, it is possible to manufacture the aforementioned compositions of poly-α-olefin polymers by polymerizing olefins in one stage.

It is desirable to use for such at least two catalysts a combination of at least one catalyst selected from between the α-olefin polymerization catalyst (1) mentioned below and the α-olefin polymerization catalyst (2) mentioned below and at least one catalyst selected from between the α-olefin polymerization catalyst (3) mentioned below and the α-olefin polymerization catalyst (4) mentioned below.

Olefin polymerization catalyst (1):

A catalyst comprising:

(A) A racemic form (A-1)of a transition metal compound represented by the following formula (II):

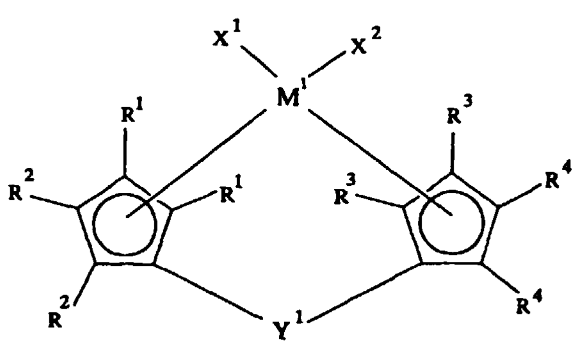

(II)

(wherein $M^1$ stands for a transition metal atom in the Group IV to VIB of the periodic table; $R^1$, $R^2$, $R^3$ and $R^4$, which may be the same or different from one another, stand for a hydrocarbon group having 1 to 20 carbon atoms, a halogenated hydrocarbon group having 1 to 20 carbon atoms, a silicon-containing group, an oxygen-containing group, a sulfur-containing group, a nitrogen-containing group, phosphor-containing group, hydrogen atom or halogen atom, and parts of the mutually adjacent groups may be bonded to form a ring together with the carbon atoms bonded by these groups; $X^1$ and $X^2$, which may be the same or different from one another, stand for a hydrocarbon

group, a halogenated hydrocarbon group, an oxygen-containing group, a sulfur-containing group, a silicon-containing group, hydrogen atom or halogen atom; and $Y^1$ stands for a bivalent hydrocarbon group, a bivalent halogenated hydrocarbon group, a bivalent silicon-containing group, a bivalent germanium-containing group, a bivalent tin-containing group, -O-, -CO-, -S-, -SO-, $-SO_2-$, - Ge-, -Sn-, $-NR^5-$, $-P(R^5)-$, $-P(O)(R^5)-$, $-BR^5-$ or $-A1R^5-$ [however, $R^5$ may be the same or different from one another and stands for hydrogen atom, halogen atom, a hydrocarbon group, a halogenated hydrocarbon group or an alkoxy group];

(B)

(B-1) An organic aluminumoxy compound and/or

(B-2) A compound ($B^1$-2) which reacts with the aforementioned transition metal compound (A-1) to form an ion pair; and as required,

(C) An organoaluminum compound.

Olefin polymerization catalyst (2):
A catalyst comprising

(A) Solid-state titanium catalyst component (T) containing magnesium, titanium, halogen and an electron donor as the essential components;

(B) Organometallic catalyst component (Q); and

(C) Silicon compound (S) represented by the following formula (i) or a compound (E) having not less than 2 ether linkages existing via two or more atoms:

$$c\ Rp_n\text{-}Si\text{-}(ORq)_{4-n} \qquad (i)$$

(wherein n is 1, 2 or 3; when n is 1, Rp stands for a secondary or tertiary hydrocarbon group; when n is 2 or 3, at least 1 of Rp's stands for a secondary or tertiary hydrocarbon group, with the rest of Rp's being hydrocarbon groups, and two or more Rp's may be the same or different; Rq is a hydrocarbon group having 1 to 4 carbon atoms, and when 4-n is 2 or 3, Rq may be the same or different.)

Olefin polymerization catalyst (3):
A catalyst comprising

(A) A meso form (A-2) of a transition metal compound represented by the aforementioned formula (I);

(B)

(B-1) An organic aluminumoxy compound or

(B-2) A compound ($B^2$-2) which reacts with the aforementioned transition metal compound (A-2) to form an ion pair;

and as required,

(C) An organoaluminum compound.

Olefin polymerization catalyst (4):
A catalyst comprising

(A)a transition metal compound (A-3) represented by the following formula (III):

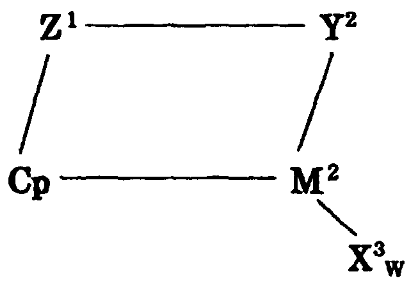

(III)

(wherein $M^2$ stands for a transition metal atom in the Group IVB of the periodic table; Cp stands for a cyclic unsaturated hydrocarbon group or a chain unsaturated hydrocarbon group; $X^3$ stands for hydrogen atom, halogen atom, a hydrocarbon group having 1 to 20 carbon atoms or an alkoxy group having 1 to 20 carbon atoms; $Z^1$ stands for $SiR^7{}_2$, $CR^7{}_2$, $SiR^7{}_2SiR^7{}_2$, $CR^7CR^7{}_2$, $CR^7{}_2CR^7{}_2CR^7{}_2$, $CR^7{=}CR^7$, $CR^7{}_2SiR^7{}_2$ or $GeRR^7{}_2$; $Y^2$ stands for $-N(R^8)-$, -O-, -S- or $-P(R^8)-$; $R^7$ stands for hydrogen atom or an alkyl, aryl, silyl, halogenated alkyl and halogenated aryl groups having up to 20 non-hydrogen atoms and a group selected from among combinations thereof; R8 stands for an alkyl group having 1 to 10 carbon atoms or an aryl group having 6 to 10 carbon atoms or may form a condensed ring system of one or more R7's and up 30 non-hydrogen atoms; and w stands for 1 or 2);

(B)

(B-1) An organic aluminumoxy compound or

(B-2) A compound ($B^3$-2) which reacts with the aforementioned transition metal compound (A-3) to form an ion pair;

and as required,

(C) An organoaluminum compound.

The olefin polymer compositions of the present invention may be manufactured by a one-stage polymerization process using a mixed catalyst as described above.

BRIEF EXPLAMATION OF DRAWINGS

Fig. 1 is a chart obtained by measuring an ethylene/$\alpha$-olefin copolymer of the present invention by $^{13}$CNMR.

Fig. 2 is an enlargement of the zone from 19.0 ppm to 22.0 ppm in the aforementioned chart.

BEST EMBODIMENT OF THE INVENTION

The poly-$\alpha$-olefin polymers of the present invention, the manufacturing process and compositions thereof are described specifically below.

It should be noted that the meaning of the term "polymerization" as used in this specification includes copolymerization as well as homopolymerization and that the meaning of the term "polymer" as used in this specification includes copolymer as well as homopolymer.

The poly-$\alpha$-olefin polymers of the present invention comprises an atactic polymer obtained by polymerizing one or more $\alpha$-olefin monomers having 3 to 10 carbon atoms or an atactic polymer obtained by homopolymerizing 1-hexene or 1-octene.

First, the $\alpha$-olefin monomer used is explained. Specific examples of the $\alpha$-olefin monomer include monomers having 2 to 10 carbon atoms such as ethylene, propylene, 1-butene, 1-pentene, 1-hexene, 1-peptane, 4-methyl-1-pentene, 3-methyl-1-pentene, 1-octene, 3-methyl-1-butene, 1-decene, styrene, vinylcyclohexene and vinylnorbornane.

Next, the poly-$\alpha$-olefin polymers formed by using the aforementioned $\alpha$-olefin monomers are described below.

It is desirable that these poly-$\alpha$-olefin polymers should have the mr/(mm + rr) value in the diad distribution of each $\alpha$-olefin being in a range of 0.7 to 1.3, preferably 0.8 to 1.2, as measured by NMR, intrinsic viscosity [$\eta$] being in a range of 0.5 to 10 dl/g, preferably 0.5 to 7 dl/g, and preferably a degree of crystallization being not more than 5%, preferably not more than 3%.

In the case of the poly-α-olefin polymers using two types of the aforementioned α-olefin monomers, the α-olefins are preferably a combination of ethylene and an α-olefin monomer having 3 to 10 carbon atoms, and their structural molar ratio (ethylene/α-olefin having 3 to 10 carbon atoms) may preferably be 40/60 to 1/99. Furthermore, it is desirable that these poly-α-olefin polymers should have the mr/(mm + rr) value in the diad distribution of each α-olefin being in a range of 0.7 to 1.3, preferably 0.8 to 1.2, as measured by NMR, intrinsic viscosity [η] being in a range of 0.5 to 10 dl/g, preferably 0.5 to 7 dl/g, more preferably 1 to 6 dl/g, and a degree of crystallization being not more than 5%, preferably not more than 3%.

Specific examples of these poly-α-olefin polymers may include atactic copolymers such as ethylene/propylene copolymer, ethylene/butene copolymer, ethylene/pentene copolymer, ethylene/hexene copolymer, ethylene/heptene copolymer, ethylene/4-methyl-1-pentene copolymer, ethylene/3-methyl-1-pentene copolymer, ethylene/octene copolymer, ethylene/3-methyl-1-butene copolymer, ethylene/decene copolymer, ethylene/vinylcyclohexene copolymer and ethylene/vinylnorbornane copolymer.

Especially, in the case of ethylene/propylene copolymer, ethylene/butene copolymer, ethylene/4-methyl-1-pentene copolymer or ethylene/octene copolymer, it is desirable that its structural molar ratio should be 1/99 to 20/80, more preferably 1/99 to 10/90.

In the case of the poly-α-olefin polymers using not less than three types of the aforementioned α-olefin monomers, the α-olefins are preferably a combination of ethylene, an α-olefin monomer (A) having 3 to 10 carbon atoms and an α-olefin monomer (B), other than (A), which has 3 to 6 carbon atoms, and it is preferable that their structural molar ratio (ethylene + A)/B is 40/60 to 1/99. Furthermore, it is desirable that these poly-α-olefin polymers should have the mr/(mm + rr) value in the diad distribution of each α-olefin being in a range of 0.7 to 1.3, preferably 0.8 to 1.2, as measured by NMR, intrinsic viscosity [η] being in a range of 0.5 to 10 dl/g, preferably 0.5 to 7 dl/g, more preferably 1 to 6 dl/g and a degree of crystallization being not more than 5%, preferably not more than 3%.

Specific examples of these poly-α-olefin polymers include copolymers such as ethylene/butene/propylene copolymer, ethylene/pentene/propylene copolymer, ethylene/hexene/propylene copolymer, ethylene/octene/propylene copolymer, ethylene/propylene/butene, ethylene/pentene/butene copolymer, ethylene/hexene/butene copolymer, ethylene/heptene/butene copolymer, ethylene/octene/butene copolymer, ethylene/propylene/pentene copolymer, ethylene/butene/pentene copolymer, ethylene/hexene/pentene copolymer, ethylene/heptene/pentene copolymer, ethylene/octene/pentene copolymer, ethylene/propylene/hexene copolymer, ethylene/butene/hexene copolymer, ethylene/pentene/hexene copolymer, ethylene/octene/hexene copolymer, ethylene/propylene/4-methyl-1-pentene copolymer, ethylene/butene/4-methyl-1-pentene copolymer, ethylene/pentene/4-methyl-1-pentene copolymer, ethylene/hexene/4-methyl-1-pentene copolymer, ethylene/octane/4-methyl-1-pentene copolymer, ethylene/propylene/3-methyl-1-pentene copolymer, ethylene/butene/3-methyl-1-pentene copolymer, ethylene/pentene/3-methyl-1-pentene copolymer, ethylene/hexene/3-methyl-1-pentene copolymer and ethylene/octene/3-methyl-1-pentene copolymer.

Especially a preferable example of the aforementioned poly-α-olefin copolymers is ethylene/propylene/4-methyl-1-pentene copolymer, and its structural molar ratio (ethylene+propylene)/4-methyl-1-pentene is preferably 1/99 to 20/80, more preferably 1/99 to 10/90.

Furthermore, the aforementioned poly-α-olefin copolymer is preferably ethylene/propylene/butene copolymer, and its structural molar ratio is preferably 1/99 to 20/80, more preferably 1/99 to 10/90.

Moreover, it is also possible to produce the aforementioned poly-α-olefin by polymerizing not less than 4 types of the α-olefin monomers as required.

The poly-α-olefin polymers described above may be manufactured by using, for example, (a) shown below as the essential component and polymerizing one or more α-olefin monomers having 2 to 10 carbon atoms in the presence of a catalyst system comprising at least one or more compound selected from among (b) to (d).

(a) A transition metal complex represented by the following formula(III) or a meso form of a transition metal complex represented by the aforementioned formula (II).

A transition metal complex represented by the formula (III) of (a) is specifically explained below:

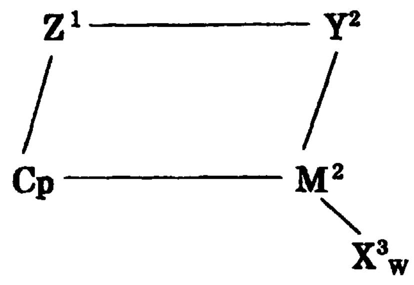

(III)

In the above formula, M stands for titanium, zirconium or hafnium; Cp stands for the ligand which is π-bonded with M and has the substituent group Z in the cyclopentadienyl skeleton such as a cyclopentadienyl group, an indenyl group, a 4, 5, 6, 7-tetrahydroindenyl group, a fluorenyl group, etc., and the ligand having this cyclopentadienyl skeleton may have another substituent group, other than Z, such as an alkyl group, a cycloalkyl group, a trialkylsilyl group and halogen atom;

X, which may be the same or different from each other and stands for an anionic ligand or a neutral Lewis base ligand, is hydrogen atom or halogen atom, or a hydrocarbon, silyl or germil group containing carbon atoms not more than 20, silicon atom or germanium atom;

Z stands for oxygen, sulfur, boron or one element in the Group 14 of the periodic table (for example, silicon, germanium or tin); and Y stands for a ligand containing nitrogen, Oxygen, phosphor or sulfur and may for a condensed ring with Z.

Specific examples of the compounds represented by the aforementioned general formula (III) include (dimethyl(t-butylamide)(tetramethyl-η5-cyclopentadienyl)silane)titanium dichloride, ((t-butylamide)(tetramethyl-η5-cyclopentadienyl)-1,2-ethanediyl) titanium dichloride, (dimethyl(phenylamide) (tetramethyl-η5-cyclopentadienyl silane) titanium dichloride, (dimethyl(t-butylamide)(tetramethyl-η5-cyclopentadienyl)silane) titanium dimethyl, (dimethyl(4-methylphenylamide)(tetramethyl-η5-cyclopentadienyl)silane) titanium dichloride, (dimethyl(t-butylamide)(η5-cyclopentadienyl)silane) titanium dichloride, and (tetramethyl(t-butylamide)(tetramethyl-η5-cyclopentadienyl)disilane) titanium dichloride.

Next the meso form of the transition metal compound represented by the following formula(II) of (a) is specifically explained:

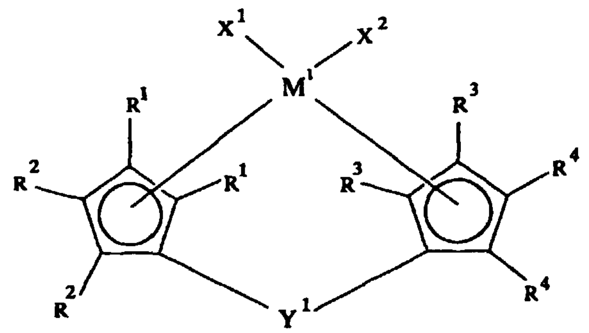

(II)

In the above formula, $M^1$ stands for a transition metal atom in the Group IV to VIB of the periodic table, and specific examples of $M^1$ include zirconium, titanium, hafnium, vanadium, niobium, tantalum, chromium, molybdenum or tungsten, preferably zirconium, titanium or hafnium;

$R^1$, $R^2$, $R^3$ and $R^4$, which may be the same or different from one another, stand for a hydrocarbon group having 1 to 20 carbon atoms, a halogenated hydrocarbon group having 1 to 20 carbon atoms, a silicon-containing group, an

oxygen-containing group, a sulfur-containing group, a nitrogen-containing group, phosphor-containing group, hydrogen atom or halogen atom, and parts of the mutually adjacent ones out of the groups represented by $R^1$, $R^2$, $R^3$ and $R^4$ may be bonded to form a ring together with the carbon atoms bonded by these groups. Further, $R^1$, $R^2$, $R^3$ and $R^4$, which are shown in two locations, respectively, but $R^1$ and $R^1$, for example, may the same or different groups. groups. Those groups represented by R which have the same suffix suggest that they can make preferably combinations when connected to one another to form a ring.

Specific examples of the hydrocarbon group having 1 to 20 carbon atoms as $R^1$, $R^2$, $R^3$ and $R^4$ include alkyl groups such as methyl, ethyl, propyl, butyl, hexyl, octyl, nonyl, dodecyl and eicosyl; cycloalkyl groups such as cyclopentyl, cyclohexyl, norbornyl and adamantyl; alkenyl groups such as vinyl, propenyl and cyclohexenyl; aryl alkyl groups such as benzyl, phenylethyl and phenylpropyl; aryl groups such as phenyl, tolyl, dimethylphenyl, trimethylphenyl, ethylphenyl, propylphenyl, biphenyl, naphthyl, methylnaphthyl, anthracenyl and phenanthryl.

Examples of the rings formed by the bonding of these hydrocarbon groups include condensed ring groups such as benzene ring, naphthalene ring, acenaphthene ring and indene ring and substituted groups which the hydrogen atom on said condensed ring groups such as benzene ring, naphthalene ring, acenaphthane ring and indene ring is substituted by an alkyl group such as methyl, ethyl, propyl, tert-butyl, sec-butyl and iso-butyl.

Examples of the halogenated hydrocarbon group include the group obtained by halogenating the aforementioned hydrocarbon group by halogen.

Examples of the silicon-containing group include mono-hydrocarbon-substituted silyl groups such as methyl silyl group and phenyl silyl group; di-hydrocarbon-substituted silyl groups such as dimethyl silyl group and diphenyl silyl group; tri-hydrocarbon-substituted silyl groups such as trimethyl silyl group, triethyl silyl group, triethyl silyl group, tributyl silyl group, tricyclohexyl silyl group, triphenyl silyl group, dimethylphenyl silyl group, methyldiphenyl silyl group, tritolyl silyl group and trinaphthyl silyl group; silyl ethers of mono-hydrocarbon-substituted silyl groups such as trimethyl silyl ether; sicon-substituted alkyl groups such as trimethylsilylmethyl group; and silicon-substituted aryl groups such as trimethyl phenyl group.

In addition, examples of the silicon-containing group besides the aforementioned groups include a group represented by $-SiR_3$ (wherein R is halogen atom, an alkyl group having 1 to 10 carbon atoms or an aryl group having 6 to 10 carbon atoms).

Examples of the oxygen-containing group include hydroxy group; alkoxy groups such as methoxy group, ethoxy group, propoxy group and butoxy group; aryloxy group such as phenoxy group, methylphenoxy group, dimethylphenoxy group and naphthoxy group; arylalkoxy group such as phenylmethoxy group and phenylethoxy group.

In addition, examples of the oxygen-containing group besides the aforementioned groups include a group represented by $-OSiR_3$ (wherein R is halogen atom, an alkyl group having 1 to 10 carbon atoms or an aryl group having 6 to 10 carbon atoms).

Examples of the sulfur-containing group include a substituted group obtained by substituting the oxygen of the aforementioned oxygen-containing group by sulfur.

In addition, examples of the sulfur-containing group besides the aforementioned groups include a group represented by -SR (wherein R is halogen atom, an alkyl group having 1 to 10 carbon atoms or an aryl group having 6 to 10 carbon atoms).

Examples of the nitrogen-containing group include amino group; alkyl amino groups such as methyl amino group, dimethyl amino group, diethyl amino group, dipropyl amino group, dibutyl amino group and dicyclohexyl amino group; aryl amino or alkyl aryl amino group such as phenyl amino group, diphenyl amino group, ditolyl amino group, dinaphthyl amino group and methylpenyl amino group.

In addition, examples of the nitrogen-containing group besides the sforementiond groups include a group represented by -NR2 (wherein R is halogen atom, an alkyl group having 1 to 10 carbon atoms or an aryl group having 6 to 10 carbon atoms).

Example of the phosphor-containing group include a phosphino group such as dimethylphosphino and diphenylphosphino.

In addition, examples of the phosphor-containing group bwesides the aforementioned groups include a group represented by -PR2 (wherein R is halogen atom, an alkyl group having 1 to 10 carbon atoms or an aryl group having 6 to 10 carbon atoms).

Examples of halogen include fluorine, chlorine, bromine and iodine.

These are preferably hydrocarbon groups, especially preferably hydrocarbon groups having 1 to 4 carbon atoms such as methyl, ethyl, propyl and butyl, a benzene ring formed by the bonding of hydrocarbon groups, and substituted groups which the hydrogen atom on the benzene ring formed by the bonding of hydrocarbon groups is substituted by an alkyl group such as methyl, ethyl, n-propyl, iso-propyl, n-butyl, iso-butyl and tert-butyl.

$X^1$ and $X^2$ may be the same or different and stand for a hydrocarbon group, a halogenated hydrocarbon group, an oxygen-containing group, a sulfur-containing group, a silicon-containing group, hydrogen atom or halogen atom.

The hydrocarbon groups are preferably hydrocarbon groups having 1 to 20 carbon atoms. Specific examples of the hydrocarbon groups include the same groups as $R^1$, $R^2$, $R^3$ and $R^4$.

The halogenated hydrocarbon groups are preferably halogenated hydrocarbon groups having 1 to 20 carbon atoms. Their specific examples include the same groups as $R^1$, $R^2$, $R^3$ and $R^4$.

As examples of the oxygen-containing group and halogen atom, the same groups or atoms as $R^1$, $R^2$, $R^3$ and $R^4$ can be cited.

Examples of the sulfur-containing group include the same groups as $R^1$, $R^2$, $R^3$ and $R^4$ and sulfonate groups such as methyl sulfonate, trifluoromethanesulfonate, phenyl sulfonate, benzyl sulfonate, p-toluene sulfonate, trimethylbenzene sulfonate, triisobutylbenzene sulfonate, p-chloro benzene sulfonate and pentafluorobenzene sulfonate; sulfinate groups such as methyl sulfinate, phenyl sulfinate, benzene sulfinate, p-toluene sulfinate, trimethylbenzene sulfinate and pentafluorobenzene sulfinate.

Examples of the silicon-containing group include the same silicon-substituted alkyl group and silicon-substituted aryl group as mentioned above.

$X^1$ and $X^2$ are preferably halogen atom, a hydrocarbon group having 1 to 20 carbon atoms or a sulphonate group.

$Y^1$ stands for a bivalent hydrocarbon group, a bivalent halogenated hydrocarbon group, a bivalent silicon-containing group, a bivalent germanium-containing group, a bivalent tin-containing group, -O-, -CO-, -S-, -SO-, $-SO_2-$, - Ge-, -Sn-, $-NR^5-$, $-P(R^5)-$, $-P(O)(R^5)-$, $-BR^5$ - or $-A1R^5$ - [Wherein R5 may be the same or different from one another and stands for hydrogen atom, halogen atom, a hydrocarbon group, a halogenated hydrocarbon group or an alkoxy group].

The hydrocarbon group is preferably a bivalent hydrocarbon group having 1 to 20 carbon atoms.

Specific examples of the hydrocarbon group include alkylene groups such as methylene, dimethylmethylene, 1,2-ethylene, dimethyl-1,2-ethylene, 1,3-trimethylene, 1,4-tetramethylene, 1,2-cyclohexylene and 1,4-cyclohexylene; arylalkylene groups such as diphenylmethylene and diphenyl-1,2-ethylene.

The halogenated hydrocarbon group is preferably a bivalent halogenated hydrocarbon group having 1 to 20 carbon atoms, and specific examples of the halogenated hydrocarbon group include a group obtained by halogenating the aforementioned bivalent hydrocarbon group having 1 to 20 carbon atoms, such as chloromethylene.

Examples of the bivalent silicon-containing group include alkyl silylene group such as silylene, methylsilylene, dimethylsilylene, diethylsilylene, di(n-propyl)silylene, di(i-propyl)silylene, di(cyclohexyl)silylene, methylphenylsilylene, diphenysilylene, di(p-tolyl)silylene and di(p-chlorophenyl)silylene; alkylaryl silylene group; aryl silylene; alkyl disilyl group such as tetramethyl-1,2-disilyl and tetraphenyl-1,2-disilyl; alkyl aryl disilyl group; and aryl disilyl group.

Examples of the bivalent germanium-containing group include a group obtained by substituting the silicon of the aforementioned bivalent silicon-containing group by germanium.

Furthermore, substituted silylene groups such as a dimehylsilylene group, a diphenylsilylene group and methylphenylsilylene group are especially preferable as the bivalent silicon-containing group, bivalent germanium-containing group and bivalent tin-containing group.

Specific examples of the meso form of these transition metal compounds represented by the aforementioned formula (I) include the meso form of the following compounds:

Dimethylsilylenebis(1-cyclopentadienyl)zirconium dichloride, dimethylsilylenebis{1-(3-methylcyclopentadienyl)}zirconium dichloride, dimethylsilylenebis{1-(2,4-dimethylcyclopentadienyl)}zirconium dichloride, dimethylsilylenebis{1-(2,3,5-trimethylcyclopentadienyl)} zirconium dichloride, dimethylsilylenebis{1-(4-phenylindenyl)}zirconium dichloride, dimethylsilylenebis{1-(2-methyl-4-phenylindenyl)}zirconium dichloride, dimethylsilylenebis{1-(2-methyl-4-(α-naphthyl)indenyl)} zirconium dichloride, dimethylsilylenebis{1-(2-methyl-4-(β-naphthyl)indenyl)}zirconium dichloride, dimethylsilylenebis{1-(2-methyl-4-(1-anthracenyl)indenyl)})zirconium dichloride, dimethylsilylenebis{1-(2-methyl-4-(2-anthracenyl)indenyl)} zirconium dichloride, dimethylsilylenebis{1-(2-methyl-4-(9-anthracenyl)indenyl)}zirconium dichloride, dimethylsilylenebis{1-(2-methyl-4-(9-phenanthryl)indenyl)} zirconium dichloride, dimethylsilylenebis{1-(2-methyl-4-(p-fluorophenyl)indenyl)}zirconium dichloride, dimethylsilylenebis {1-(2-methyl-4-(pentafluorophenyl)indenyl)}zirconium dichloride, dimethylsilylenebis{1-(2-methyl-4-(p-chlorophenyl)indenyl)}zirconium dichloride, dimethylsilylenebis {1-(2-methyl-4-(m-chlorophenyl)indenyl)}zirconium dichloride, dimethylsilylenebis{1-(2-methyl-4-(o-chlorophenyl)indenyl)} zirconium dichloride, dimethylsilylenebis{1-(2-methyl-4-(o,p-dichlorophenyl)phenylindenyl)}zirconium dichloride, dimethylsilylenebis{1-(2-methyl-4-(p-bromophenyl)indenyl)} zirconium dichloride, dimethylsilylenebis{1-(2-methyl-4-(p-tolyl)indenyl)}zirconium dichloride, dimethylsilylenebis{1-(2-methyl-4-(m-tolyl)indenyl)}zirconium dichloride, dimethylsilylenebis{1-(2-methyl-4-(o-tolyl)indenyl)}zirconium dichloride, dimethylsilylenebis{1-(2-methyl-4-(o,o'-dimethylphenyl)indenyl)}zirconium dichloride, dimethylsilylenebis{1-(2-methyl-4-(p-ethylphenyl)indenyl)} zirconium dichloride, dimethylsilylenebis{1-(2-methyl-4-(p-i-propyl)phenylindenyl)}zirconium dichloride, dimethylsilylenebis{1-(2-methyl-4-(p-bezylphenyl)indenyl)}zirconium dichloride, dimethylsilylenebis{1-(2-methyl-4-(p-biphenyl)indenyl)} zirconium dichloride, diphenylsilylenebis{1-(2-methyl-4-(m-biphenyl)indenyl)}zirconium dichloride, dimethylsilylenebis{1-(2-methyl-4-(p-trimethylsilylphenyl)indenyl)}zirconium dichloride, dimethylsilylenebis{1-(2-methyl-4-(m-trimethylsilylphenyl)indenyl)}zirconium dichloride, dimethylsilylenebis{1-(2-ethyl-4-phenylindenyl)}zirconium dichloride, dimethylsilylenebis{1-(2-ethyl-4-(α-naphthyl)indenyl)}zirconium dichloride, dimethylsilylenebis{1-(2-ethyl-4-(β-naphthyl)indenyl)}zirconium dichloride, dimethylsilylenebis{1-(2-ethyl-4-(1-anthracenyl)indenyl)} zirconium dichloride, dimethylsilylenebis{1-(2-ethyl-4-(2-anthracenyl)indenyl)} zirconium dichloride, dimethylsilylenebis{1-(2-ethyl-4-(9-anthracenyl)indenyl)}zirconium dichloride, dimethylsilylenebis{1-(2-ethyl-4-(9-phenanthryl)indenyl)} zirconium dichloride, dimethylsilylenebis{1-(2-ethyl-4-phenylindenyl)zirconium dichloride, dimethylsilylenebis{1-(2-phenyl-4-phenylindenyl)}zirconium dichloride, dimethylsilylenebis{1-(2-n-propyl-4-phenylindenyl)}zirconium dichloride, dimethylsilylenebis{1-(2-n-propyl-4-(α-naphthyl)indenyl)}zirconium dichloride, dimethylsilylenebis{1-(2- n-propyl -4-( β-naphthyl)indenyl)}zirconium dichloride, dimethylsilylenebis{1-(2-n-propyl-4-(1-anthracenyl)indenyl)} zirconium dichloride, dimethylsilylenebis{1-(2-n-propyl-4-(2-anthracenyl)indenyl)}zirconium dichloride, dimethylsilylenebis{1-(2-n-propyl-4-(9-anthracenyl)indenyl)}zirconium dichloride, dimethylsilylenebis{1-(2- n-propyl-4-(9-phenathryl)indenyl)}zirconium dichloride, dimethylsilylenebis{1-(2-i-butyl-4-phenylindenyl)}zirconium dichloride, dimethylsilylenebis{1-(2-i-butyl-4-(α-naphthyl)indenyl)}zirconium dichloride, dimethylsilylenebis{1-(2-i-butyl-4-(β-naphthyl)indenyl)} zirconium dichloride, dimethylsilylenebis{1-(2-i-butyl-4-(1-anthracenyl)indenyl)}zirconium dichloride, dimethylsilylenebis{1-(2-i-butyl-4-(2-anthracenyl)indenyl)}zirconium dichloride, dimethylsilylenebis{1-(2-i-butyl-4-(9-anthracenyl)indenyl)}zirconium dichloride, dimethylsilylenebis{1-(2-i-butyl-4-(9-phenathryl)indenyl)}zirconium dichloride, diethylsilylenebis{1-(2-methyl-4-phenylindenyl)}zirconium dichloride, di(i-propyl)silylenebis{1-(2-methyl-4-phenylindenyl)}zirconium dichloride, di(n-butyl)silylenebis{1-(2-methyl-4-phenylindenyl)}zirconium dichloride, dicyclohexylsilylenebis{1-(2-methyl-4-phenylindenyl)}zirconium dichloride, methyphenyllsilylenebis{1-(2-methyl-4-phenylindenyl)}zirconium dichloride, diphenylsilylenebis{1-(2-methyl-4-phenylindenyl)}zirconium dichloride, di(p-tolyl)silylenebis{1-(2-methyl-4-phenylindenyl)}zirconium dichloride, di(p-chlorophenyl)silylenebis{1-(2-methyl-4-phenylindenyl)}zirconium dichloride, methylenebis{1-(2-methyl-4-phenylindenyl)}zirconium dichloride, ethylenebis{1-(2-methyl-4-phenylindenyl)}zirconium dichloride, dimethylgermylenebis{1-(2-methyl-4-phenylindenyl)}zirconium dichloride, dimethylsilylenebis{1-(2-methyl-4-phenylindenyl)}zirconium dibromide, dimethylsilylenebis{1-(2-methyl-4-phenylindenyl)}zirconium dimethyl, dimethylsilylenebis{1-(2-methyl-4-phenylindenyl)}zirconium methylchloride, dimethylsilylenebis{1-(2-methyl-4-phenylindenyl)}zirconium chlorideSO2Me, dimethylsilylenebis{1-(2-methyl-4-phenylindenyl)}zirconium chlorideOSO2Me, dimethylsilylenebis{1-(2-methyl-4-phenylindenyl)}titanium dichloride, dimethylsilylenebis{1-(2-methyl-4-phenylindenyl)}hafnium dichloride, dimethylsilylenebis{1-(2,7-dimethyl-4-ethylindenyl)}zirconium dichloride, dimethylsilylenebis{1-(2,7-dimethyl-4-propylindenyl)}zirconium dichloride, dimethylsilylenebis{1-(2,7-dimethyl-4-i-propylindenyl)}zirconium dichloride, dimethylsilylenebis{1-(2,7-dimethyl-4-n-butylindenyl)}zirconium dichloride, dimethylsilylenebis{1-(2,7-dimethyl-4-sec-butylindenyl)}zirconium dichloride, dimethylsilylenebis{1-(2,7-dimethyl-4-t-butylindenyl)}zirconium dichloride, dimethylsilylenebis{1-(2,7-dimethyl-4-n-pentylindenyl)}zirconium dichloride, dimethylsilylenebis{1-(2,7-dimethyl-4-n-hexytindenyl)}zirconium dichloride, dimethylsilylenebis{1-(2,7-dimethyl-4-cyclohexylindenyl)}zirconium dichloride, dimethylsilylenebis{1-(2,7-dimethyl-4-methylcyclohexylindenyl)} zirconium dichloride, dimethylsilylenebis{1-(2,7-dimethyl-4-phenylethylindenyl)}zirconium dichloride, dimethylsilylenebis{1-(2,7-dimethyl-4-phenyldichloromethylindenyl)} zirconium dichloride, dimethylsilylenebis{1-(2,7-dimethyl-4-chloromethylindenyl)}zirconium dichloride, dimethylsilylenebis{1-(2,7-dimethyl-4-trimethylsilylmethylindenyl)} zirconium dichloride, dimethylsilylenebis{1-(2,7-dimethyl-4-trimethylsiloxymethylindenyl)} zirconium dichloride, diethylsilylenebis{1-(2,7-dimethyl-4-i-propylindenyl)}zirconium dichloride, di(i-propyl)silylenebis{1-(2,7-dimethyl-4-i-propylindenyl)}zirconium dichloride, di(n-butyl)silylenebis{1-(2,7-dimethyl-4-i-propylindenyl)}zirconium dichloride, di(cyclohexyl)silylenebis{1-(2,7-dimethyl-4-i-propylindenyl)}zirconium dichloride, methylphenylsilylenebis{1-(2,7-dimethyl-4-i-propylindenyl)}zirconium dichloride, methylphenylsilylenebis{1-(2,7-dimethyl-4-t-butylindenyl)}zirconium dichloride, diphenylsilylenebis{1-(2,7-dimethyl-4-t-butylindenyl)}zirconium dichloride, diphenylsilylenebis{1-(2,7-dimethyl-4-i-propylindenyl)}zirconium dichloride, diphenylsilylenebis{1-(2,7-dimethyl-4-ethylindenyl)}zirconium dichloride, di(p-tolyl)silylenebis{1-(2,7-dimethyl-4-i-propylindenyl)}zirconium dichloride, di(p-chlorophenyl)silylenebis{1-(2,7-dimethyl-4-i-propylindenyl)}zirconium dichloride, dimethylsilylenebis{1-(2-methyl-4-i-propyl-7-ethylindenyl)}zirconium dibromide, dimethylsilylenebis{1-(2,3,7-trimethyl-4-ethylindenyl)}zirconium dichloride, dimethylsilylenebis{1-(2,3,7-trimethyl-4-n-propylindenyl)}zirconium dichloride, dimethylsilylenebis{1-(2,3,7-trimethyl-4-i-propylindenyl)}zirconium dichloride, dimethylsilylenebis{1-(2,3,7-trimethyl-4-n-butylindenyl)}zirconium dichloride, dimethylsilylenebis{1-(2,3,7-trimethyl-4-sec-butylindenyl)}zirconium dichloride, dimethylsilylenebis{1-(2,3,7-trimethyl-4-t-butylindenyl)}zirconium dichloride, dimethylsilylenebis{1-(2,3,7-trimethyl-4-n-pentylindenyl)}zirconium dichloride, dimethylsilylenebis{1-(2,3,7-trimethyl-4-n-hexylindenyl)}zirconium dichloride, dimethylsilylenebis{1-(2,3,7-trimethyl-4-cyclohexylindenyl)}zirconium dichloride, dimethylsilylenebis{1-(2,3,7-trimethyl-4-methylcyclohexylindenyl)}zirconium dichloride, dimethylsilylenebis{1-(2,3,7-trimethyl-4-trimethylsilylmethylindenyl)}zirconium dichloride, dimethylsilylenebis{1-(2,3,7-trimethyl-4-trimethylsiloxymethylindenyl)}zirconium dichloride, dimethylsilylenebis{1-(2,3,7-trimethyl-4-phenylethylindenyl)}zirconium dichloride, dimethylsilylenebis{1-(2,3,7-trimethyl-4-phenyldichloromethylindenyl)}zirconium dichloride, dimethylsilylenebis{1-(2,3,7-trimethyl-4-chloromethylindenyl)}zirconium dichloride, diethylsilylenebis{1-(2,3,7-trimethyl-4-i-propylindenyl)}zirconium dichloride, di(i-propyl)silylenebis{1-(2,3,7-trimethyl-4-i-propylindenyl)}zirconium dichloride, di(n-butyl)silylenebis{1-(2,3,7-trimethyl-4-i-propylindenyl)}zirconium dichloride, di(cyclohexyl)silylenebis{1-(2,3,7-trimethyl-4-i-ropylindenyl)}zirconium dichloride, methylphenylsilylenebis{1-(2,3,7-trimethyl-4-i-propylindenyl)}zirconium dichloride, methylphenylsilylenebis{1-(2,3,7-trimethyl-4-t-butylindenyl)}zirconium dichloride, diphenylsilylenebis{1-(2,3,7-trimethyl-4-t-butylindenyl)}zirconium dichloride, diphenylsilylenebis{1-(2,3,7-trimethyl-4-i-propylindenyl)}zirconium dichloride, diphenylsilylenebis{1-(2,3,7-trimethyl-4-ethylindenyl)}zirconium dichloride, di(p-tolyl)silylenebis{1-(2,3,7-trimethyl-4-i-propylindenyl)}zirconium dichloride, di(p-chlorophenyl)silylenebis{1-(2,3,7-trimethyl-4-i-propylindenyl)}zirconium dichloride, dimethylsilylenebis{1-(2-methyl-4-i-propyl-7-methylindenyl)} zirconium dimethyl, dimethylsilylenebis{1-(2-methyl-4-i-propyl-7-methylindenyl)} zirconium methylchloride, dimethylsilylenebis{1-(2-methyl-4-i-propyl-7-methylindenyl)}zirconium-bis(methanesulfonate), dimethylsilylenebis{1-(2-methyl-4-i-propyl-7-methylindenyl)}zirconium-bis(p-phenylsulfinate), dimethylsilylenebis{1-(2-methyl-3-methyl-4-i-propyl-7-methylindenyl)} zirconium dichloride, dimethylsilylenebis{1-(2-ethyl-4-i-propyl-7-methylindenyl)}zirconium dichloride, dimethylsilylenebis{1-(2-phenyl-4-i-propyl-7-methylindenyl)}zirconium dichloride, dimethylsilylenebis{1-(2-methyl-4-i-propyl-7-methylindenyl)}titanium dichloride, dimethylsilylenebis{1-(2-methyl-4-i-propyl-7-methylindenyl)} hafnium dichloride, dimethylsilylenebis{1-(2-ethyl-4,5-benzoindenyl)}zirconium dichloride, dimethylsilylenebis{1-(2-methyl-α-acenaphthindenyl)}zirconium dichloride, methylphenylsilylenebis{1-(2-methyl-4,5-benzoindenyl)}zirconium dichloride, methylphenylsilylenebis{1-(2-methyl-α-acenaphthindenyl cyclopentadienyl)} zirconium dichloride, methylphenylsilylenebis{1-(4,5-benzoindenyl)}zirconium dichloride, methylphenylsilylenebis{1-(2,6-dimethyl-4,5-benzoindenyl)}zirconium dichloride, and methylphenylsilylenebis{1-(2,4,6-trimethyl-4,5-benzoindenyl)}zirconium dichloride.

Compounds replacing the zirconium in the aforementioned compounds with titanium or hafnium can also be cited as the examples of the meso form of these transition metal compounds.

As examples of the (b) component used in the present invention, which is the compound that reacts with the transition metal M in the component (a) to form an ionic complex, the Lewis acid, ionic compound and carborane compound which are disclosed in Published Patent Publication HEI 1-501950, Published Patent Publication HEI 1-502036, Laid-open Patent Publication HEI 3-179005, Laid-open Patent Publication HEI 3-179006, Laid-open Patent Publication HEI 3-207703, Laid-open Patent Publication HEI 3-207704, U.S. Patent 547718, etc., can be cited.

Examples of the Lewis acid include magnesium-containing Lewis acid, aluminum-containing Lewis acid and boron-containing Lewis acid, and boron-containing Lewis acid out of them is preferable.

Specific examples of the Lewis acid containing boron atom include the compounds represented by the following formula (VII):

$$BRa\ Rb\ Rc \qquad (VII)$$

(wherein Ra, Rb and Rc stands each independently for a phenyl group which may have a substituent group such as fluorine atom, a methyl group and a trifluoromethyl group, or fluorine atom.)

Specific examples of the compounds represented by the aforementioned formula (VII) include trifluoroboron, triphenylboron, tris(4-fluorophenyl)boron, tris(3,5-difluorophenyl) boron, tris(4-fluoromethylphenyl)boron, tris(pentafluorophenyl)boron, tris(p-tolyl)boron, tris(o-tolyl)boron and tris(3,5-dimethylphenyl)boron. Out of these, tris(pentafluorophenyl)boron is especially preferable.

The ionic compound is a salt comprising a cationic compound and an anionic compound. An anion reacts with the aforementioned transition metal compound (a) to make it cationic, and form ion pairs and thereby stabilize transition metal cation. Examples of such anion include organic boron compound anion, organic arsenic compound anion and organoaluminum compound anion, and those anions which stabilize transition metal cation species at a relatively high volume are preferable. Examples of cation include metal cation, organometallic cation, carbonium cation, tritium cation, oxonium cation, sulphonium cation, phosphonium cation and ammonium cation. More specific examples of cation include triphenylcalbenium cation, tributylammonium cation, N,N-dimethylammonium cation and ferrocenium cation.

Out of these, a preferable anion is an ionic compound containing a boron compound. Specifically, examples of trialkyl-substituted ammonium salt include triethylammonium tetra(phenyl)boron, tripropylammonium tetra(phenyl)boron, tri(n-butyl) ammonium tetra(phenyl)boron, trimethylammonium tetra(p-tolyl)boron, trimethylammonium tetra(o-tolyl)boron, tributylammonium tetra(pentafluoropenyl)boron, tripropylammonium tetra(o,p-dimethylphenyl)boron, tributylammonium tetra(m,m-demethylphenyl)boron, tributylammonium tetra(p-trifluoromethylphenyl)boron, and tri(n-butyl)ammonium tetra(o-tolyl)boron and tri(n-butyl)ammonium tetra(4-fluorophenyl)boron.

Examples of N,N-dialkylanilium salt include N,N-dimethylanilinium tetra(phenyl)boron, N,N-diethylanilinium tetra(phenyl)boron and N,N-2,4,6-pentamethylaniliniumtetra (phenyl)boron.

Examples of dialkylammonium salt include di(n-propyl) ammonium tetra(pentafuluorophenyl) boron, and dicyclohexyl ammonium tetra(phenyl) boron.

Examples of triarylphosphonium salt include triphenylphosphonium tetra(phenyl) boron, tri(methylphenyl)phosophonium tetra(phenyl)boron and tri(dimethylphenyl)phosphonium tetra(phenyl)boron.
Furthermore, examples of the ionic compound containing boron atom include triphenylcarbenium tetrakis(pentafluorophenyl)borate, N,N-dimethylanilinium tetrakis(pentafluorophenyl)borate and ferroceniumtetra(pentafluorophenyl)borate.

The following compounds can also be cited as examples. (In the ionic compounds listed below, the paired ions are, but are not limited to, tri(n-butyl)ammonium.)

Anion salts, such as: bis[tri(n-butyl)ammonium] nonaborate, bis[tri(n-butyl)ammonium] decaborate, bis[tri(n-butyl)ammonium] undecaborate, bis[tri(n-butyl)ammonium] dodecaborate, bis[tri(n-butyl)ammonium] decachlorodecaborate, bis[tri(n-butyl)ammonium]dodecachlorododecaborate, tri(n-butyl)ammonium 1-carbadecaborate, tri(n-butyl)ammonium 1-carbaundecaborate, tri(n-butyl)ammonium 1-carbadodecaborate, tri(n-butyl)ammonium 1-trimethylsilyl-1-carbadecaborate and tri(n-butyl)ammonium bromo-1-carbadodecaborate; Examples of borane, carborane complex and salts of carborane anion include decaborane(14), 7,8-dicarbaundecaborane(13), 2,7-dicarbaundecaborane(13), undecahydride-7,8-dimethyl-7,8-dicarbadecaborane, dodecahydride-11-methyl-2,7-dicarbaundecaborane, tri(n-butyl)ammonium 6-carbadecaborate(14), tri(n-butyl)ammonium 6- carbadecaborate(12), tri(n-butyl)ammonium 7-carbaundecaborate(13), tri(n-butyl)ammonium 7,8- di-carbaundecaborate(12), tri(n-butyl)ammonium 2,9-di-carbaundecaborate(12), tri(n-butyl)ammonium dodecahydride-8-methyl-7,9-dicarbaundecaborate, tri(n-butyl)ammonium dodecahydride-8-methyl-7,9-dicarbaundecaborate, tri(n-butyl)ammonium dodecahydride-8-methyl-7,9-dicarbaundecaborate, tri(n-butyl)ammonium dodecahydride-8-methyl-7,9-dicarbaundecaborate, tri(n-butyl)ammonium undecahydride-9-trimethylsilyl-7,8-dicarbaundecaborate and tri(n-butyl)ammonium undecahydride-4,6-dibromo-7-carbaundecaborate.

Carboranes and salts of carborane such as: 4-carbanonaborane(14), 1,3-dicarbanonaborane(13), 6,9- dicarbadecaborane(14), dodecahydride-1-phenyl-1,3-dicarbanonaborane, dodecahydride-1-methyl-1,3-dicarbanonaborane and undecahydride-1,3-dimethyl-1,3-dicarbanonabarane.

In addition, the following compounds can be cited as examples.

(The paired ions in the ionic compounds listed below are, but are not limited to, tri(n-butyl)ammonium.)

Salts of metallocarborane, and metalloborane anion such as: tri(n-butyl)ammonium bis(nonahydride-1,3-dicarbanonaborate)cobaltate(III), tri(n-butyl)ammonium bis(undecahydride-7,8-dicarbaundecaborate)ferrate(III), tri(n-butyl)ammonium bis(undecahydride-7,8-dicarbaundecaborate) cobaltate(III), tri(n-butyl)ammonium bis(undecahydride-7,8-dicarbaundecaborate) nickelate(III), tri(n-butyl)ammonium bis(undecahydride-7,8-dicarbaundecaborate) cuprate(III), tri(n-butyl)ammonium bis(undecahydride-7,8-dicarbaundecaborate) aurate(III), tri(n-butyl)ammonium bis(nonahydride-7,8-dimethyl-7,8-dicarbaundecaborate) ferrate(III), tri(n-butyl)ammonium bis(nonahydride-7,8-dimethyl-7,8-dicarbaundecaborate) chromate(III), tri(n-butyl)ammonium bis(tribromooctahydride-7,8-dicarbaundecaborate) cobaltate(III), tri(n-butyl)ammonium bis(dodecahydridedicarbadodecaborate) cobaltate(III), bis[tri(n-butyl)ammonium] bis(dodecahydrideddodecaborate)nickelate(III), tris[tri(n-butyl)ammonium] bis(undecahydride-7-carbaundecaborate) chromate(III), bis[tri(n-butyl)ammonium] bis(undecahydride-7-carbaundecaborate)manganate(IV), bis[tri(n-butyl)ammonium] bis(undecahydride-7-carbaundecaborate) cobaltate(III) and bis[tri(n-butyl)ammonium] bis(undecahydride-7-carbaundecaborate) nickelate(IV).

As examples of the organoaluminum compound (c) used in the present invention, the organoaluminum compound represented by the following formula (VIII) can be cited:

$$Rd_n\ AlX_{3-n} \qquad \text{(VIII)}$$

(wherein Rd stands for a hydrocarbon group having 1 to 12 carbon atoms, X stands for halogen atom or hydrogen atom, and n is 1 to 3.)

In the above formula (VIII), Rd is a hydrocarbon group having 1 to 12 carbon atoms, such as an alkyl group, a cycloalkyl group or an aryl group, specifically a methyl group, an ethyl group, an n-propyl group, an isopropyl group, an isobutyl group, a pentyl group, a hexyl group, an octyl group, a cyclopentyl group, a cyclohexyl group, a phenyl group and a tolyl group, for example.

Specific examples of the organoaluminum compound (c) include the following compounds:

Trialkylaluminums such as trimethylaluminum, triethylaluminum, trisopropylaluminum, triisobutylaluminum, trioctylaluminum, tri(2-ethylhexyl)aluminum and tridecylaluminum;

alkenylaluminums such as isoprenylaluminum; dialkylaluminum halides such as dimethylaluminum chloride, diethylaluminum chloride, diisopropylaluminum chloride, diisobutylaluminum chloride and dimethylaluminum bromide;

alkylaluminum sesquihalides such as methylaluminum sesquichloride, ethylaluminum sesquichloride, isopropylaluminum sesquichloride, butylaluminum sesquichloride and ethylaluminum sesquibromide;

alkylaluminum dihalides such as methylaluminum dichloride, ethylaluminum dichloride, isopropylaluminum dichloride and ethylaluminum dibromide;

alkylaluminum hydride such as diethylaluminum hydride and diisobutylaluminum hydride.

The compound represented by the following formula (IX) may be used as the organoaluminum compound (c):

$$Rd_n\ AlY_{3-n} \qquad \text{(IX)}$$

(wherein Rd is the same as described above; Y stands for the -ORe group and the $OSiRf_3$ group, $-OAlRg_2$ group, $-NRh_2$ group, $-SiRi_3$ group or $-N(Rj)AlRk_2$ group; n is 1 to 2; Re, Rf, Rg and Rk are the methyl group, ethyl group, isopropyl group, isobutyl group, cyclohexyl group and phenyl group, for example; Rh is hydrogen atom, methyl group, ethyl group, isopropyl group, phenyl group and trimethylsilyl group; and Ri and Rj are the methyl group and ethyl group.

Specific examples of these organoaluminum compounds include the following compounds:

(1)compounds represented by $Rd_nAl(ORe)_{3-n}$ such as dimethylaluminum methoxide, diethylaluminumethoxide and diisobutylaluminummethoxide
(2) compounds represented by $Rd_nAl(OSiRf_3)_{3-n}$ such as $Et_2Al(OSiMe_3)$, $(iso\text{-}Bu)_2Al(OSiMe_3)$ and $(iso\text{-}Bu)_2Al(OSiEt_3)$
(3) compounds represented by $Rd_nAl(OAlRg_2)_{3-n}$ such as $Et_2AlOAlEt_2$ and $(iso\text{-}Bu)_2AlOAl(iso\text{-}Bu)_2$
(4) compounds represented by $Rd_nAl(NRh_2)_{3-n}$ such as $Me_2AlNEt_2$, $Et_2AlNHMe$, $Me_2AlNHEt$, $Et_2AlN(SiMe_3)_2$ and $(iso\text{-}Bu)_2AlN(SiMe_3)_2$
(5) compounds represented by $RD_nAl(SiRi_3)_{3-n}$ such as $(iso\text{-}Bu)_2AlSiMe_3$
(6) compounds represented by $Rd_nAl(N(Rj)AlRk_2)_{3-n}$ such as $Et_2AlN(Me)AlEt_2$ and $(iso\text{-}Bu)_2AlN(Et)Al(iso\text{-}Bu)_2$

Out of the organoaluminum compounds represented by the aforementioned formula (VIII) or (IX), the compound represented by the formula $Rd_3Al$, is preferable, and especially a compound wherein Rd is the isoalkyl group is preferable.

Such organoaluminum compound (c) may be used singly or in combination with not less than two of them.

The component (d) alumoxane used in the present invention may be alumoxane conventonally known to the public or an organic aluminumoxy compound insoluble in benzene as cited as an example in Laid-open Patent Publication HEI 2-78687.

The alumoxane conventionally known to the public can be prepared by the following method, for example:

(1) Method in which an organoaluminum compound such as trialkylaluminum is added to a hydrocarbon medium suspension of a compound containing absorbed water or a salt containing crystal water, such as magnesium chloride hydrate, copper sulfate hydrate, aluminum sulfate hydrate, nickel sulfate hydrate and cerium chloride hydrate, to cause reaction.
(2) Method in which water, ice or steam is caused to act directly on an organoaluminum compound such as trialkylaluminum in a medium such as benzene, toluene, ethylether and tetrahydrofuran.
(3) Method in which a organoaluminum compound such as trialkylaluminum is made to react with an organic tin oxide such as dimethyltinoxide and dibutyltinoxide in a solvent such as decane, benzene and toluene.

Such alumoxane may contain a small amount of an organometallic component. Such alumoxane may also be dissolved in a solvent again or suspended in a poor solvent of alumoxane after the solvent or an unreacted organoaluminum compound is removed by distillation from a recovered solution of the aforementioned alumoxane.

Specific examples of the organoaluminum compounds used in the preparation of alumoxane include trialkylaluminums such as trimethylaluminum, triethylaluminum, tripropylaluminum, triisopropylaluminum, tri-n-butylaluminum, triisobutylaluminum, tri-sec-butylaluminum, tri-tert-butylaluminum, tripentylaluminium, trihexylaluminium, trioctylaluminium and tridecylaluminium; tricycloalkylaluminums such as tricyclohexylaluminum and tricyclooctylaluminum; dialkylaluminum halides such as dimethylaluminum chloride, diethylaluminum chloride, diethylaluminum bromide and diisobutylaluminum chloride; dialkylaluminium hydrides such as diethylaluminum hydride and diisobutylaluminum hydride; dialkyl aluminum alkoxides such as dimethyl aluminum methoxide and diethyl aluminum ethoxide; and dialkylaluminum aryloxides such as diethylaluminum phenoxide.

Out of these, trialkylaluminum and tricycloalkylaluminum are preferable, and trimethylaluminum is especially preferable.

Moreover, as an example of the organoaluminum compound used in the preparation of alumoxane, the isoprenylaluminum represented by the following formula (VI) can be cited:

$$(i\text{-}C_4H_9)_x\,Al_y\,(C_5H_{10})_z \qquad \text{(VI)}$$

(wherein x, y and z are positive numbers, and $z \geqq 2x$)

Such organoaluminum compound may be used singly or in combination.

Examples of the solvent used in the preparation of alumoxane include hydrocarbon solvents of aromatic hydrocarbons such as benzene, toluene, xylene, cumene and cymene, aliphatic hydrocarbons such as pentane, hexane, heptane, octane, decan, dodecane, hexadecane and octadecane, alicyclic hydrocarbons such as cyclopentane, cyclohexane, cyclooctane and methylcyclopentane, petroleum fractions such as gasoline, kerosene and gas oil, and

halides, particularly chlorides and bromides, of the aforementioned aromatic hydrocarbons, aliphatic hydrocarbons and alicyclic hydrocarbons. In addition, ethers such as ethylether and tetrahydrofuran may be used as such solvent. Out of these solvents, aromatic hydrocarbons or aliphatic hydrocarbons are especially preferable.

These organic aluminumoxy compounds may be used singly or in combination with not less than two of them.

At least one of the above components (a) transition metal complex, (b) compound forming an ionic complex, (c) organoaluminum compound and (d) alumoxane may be used in the state of being supported on a fine particle carrier.

Such fine particle carrier is an inorganic or organic compound, which is a granular or fine particle solid having a particle diameter of 10 to 300 μm, preferably 20 to 200 μm.

Out of them, preferable examples of the inorganic carrier include porous oxides, specifically $SiO_2$, $Al_2O_3$, MgO, $ZrO_2$, $TiO_2$, $B_2O_3$, CaO, ZnO, BaO, $ThO_2$, or mixtures of these, such as $SiO_2$-MgO, $SiO_2$-$Al_2O_3$, $SiO_2$-$TiO_2$, $SiO_2$-$V_2O_5$, $SiO_2$-$Cr_2O_3$ and $SiO_2$-$TiO_2$-MgO. Out of these especially preferable are the ones using $SiO_2$ and/or $Al_2O_3$ as the main component.

Further, the aforementioned inorganic oxides may contain small amounts of the carbonate, sulfate, nitrate and oxide components such as $Na_2CO_3$, $K_2CO_3$, $CaCO_3$, $MgCO_3$, $Na_2SO_4$, $A1_2(SO_4)_3$, $BaSO_4$, $KNO_3$, $Mg(NO_3)_2$, $Al(NO_3)_3$, $Na_2O$, $K_2O$ and $Li_2O$.

Such fine particle carriers are different in properties depending on their types and manufacturing processes. However, the fine particle carrier preferably used in the present invention has a specific surface area in a range of 50 to 1,000 $m^2/g$, more preferably 100 to 700 $m^2/g$, and a pore volume in a range of 0.3 to 2.5 $cm^3/g$. Such fine particle carriers are used after being baked as required at 100 to 1,000°C, preferably 150 to 700°C.

Furthermore, as examples of the fine particle carrier, a granular or fine particle solid of an organic compound having a particle diameter of 10 to 300 μm. Examples of these organic compounds include (co)polymers formed by using α-olefins having 2 to 14 carbon atoms, such as ethylene, propylene, 1-butene and 4-methyl-1-pentene as the main component, or the polymers or copolymers formed by using vinylcyclohexane and styrene as the main component.

Such fine particle carriers may contain a surface hydroxyl group and/or water.

The catalyst can be prepared by mixing and bringing into contact (a) a transition metal complex, (b) a compound forming an ionic complex and/or (d) alumoxane, a fine particle carrier, and as required (c) an organoaluminum compound in an inert hydrocarbon medium or an olefin medium.

Specific examples of the inert hydrocarbon medium used in the preparation of the polymerization catalyst include aliphatic hydrocarbons such as propane, butane, pentane, hexane, heptane, octane, decane, dodecane and kerosene; alicyclic hydrocarbons such as cyclopentane, cyclohexane and methylcyclopentane; aromatic hydrocarbons such as benzene, toluene and xylene; and halogenated hydrocarbons such as ethylenechloride, chlorobenzene and dichloromethane or mixtures thereof.

As the method for getting the aforementioned transition metal complex (a) supported on a fine particle carrier, a method is normally used in which the transition metal complex (a) and a fine particle carrier are mixed and brought into contact in a hydrocarbon medium. At the time of bringing the aforementioned components into contact, the organoaluminum compound (c) may also be mixed and brought into contact with them additionally.

More specific examples of the aforementioned method include:

(1) Method in which after (b) and/or (c) is added to and mixed with the fine particle carrier suspended in a hydrocarbon medium, the medium is filtered out, and the solid component thus obtained is brought into contact with the transition metal complex (a), which has been suspended or dissolved in a hydrocarbon solvent.

(2) Method in which after (b) and/or (c) is added to and mixed with the fine particle carrier suspended in an aromatic hydrocarbon medium, an aliphatic hydrocarbon is further added, and then the aromatic hydrocarbon is removed under reduced pressure; as a result of these operations, the organic aluminumoxy compound precipitates on the fine particle carrier; and next, the solid component obtained by filtering out the aliphatic hydrocarbon and the transition metal complex (a) suspended or dissolved in the hydrocarbon medium are brought into contact.

(3) Method in which after (b) and/or (c) and the transition metal complex (a) are added to and mixed with the fine particle carrier suspended in a hydrocarbon medium, the hydrocarbon medium is removed by a filter or an evaporator.

In mixing the above components, the transition metal complex (a) is normally used in an amount of $10^{-6}$ to 5 x $10^{-3}$ mol, preferably 3 x $10^{-6}$ to $10^{-3}$ mol, per g of the fine particle carrier, and the concentration of the transition metal complex (a) is approx. 5 x $10^{-6}$ to 2 x $10^{-2}$ mol/liter, preferably $10^{-5}$ to $10^{-2}$ mol/liter. In the case of using alumoxane for (c), the atomic ratio (Al/transition metal) of the aluminum in alumoxane (c) to the transition metal in the transition metal complex (a) is normally 10 to 3,000, preferably 20 to 2,000. In the case of using an ionized ionic compound for (b), the molar ratio [(a)/(b)] of the transition metal complex (a) to (b) is normally in a range of 0.01 to 10; preferably 0.1 to 5. In

the case of using the organoaluminum compound (c), the atomic ratio (Al/transition metal) of the aluminum in the organoaluminum compound (c) to the transition metal in the transition metal complex (a) is normally 10 to 3,000, preferably 20 to 2,000.

The mixing temperature in the mixing of the aforementioned components is normally -50 to 150°C, preferably -20 to 120°C, and the contact time is 1 to 1,000 minutes, preferably 5 to 600 minutes. Further, the mixing temperature may be varied during the mixing and contacting of the components.

The operation of getting the transition metal complex (a) supported on a fine particle carrier may be carried out in the presence of zeolite or organic amine.

As an example of zeolite, the compound represented by the following general formula can be cited, for example, and molecular sieve TM is preferable:

$$M_{2/n}O \cdot Al_2O_3 \cdot xSiO_2 \cdot yH_2O$$

(wherein M stands for Na, K, Ca or Ba, n stands for the value of M, x is 2 to 10, and y is 2 to 7.)

Examples of organic amine include monoalkylamines such as methylamine, ethylamine, n-propylamine, isopropylamine, n-butylamine and t-butylamine; dialkylamines such as dimethylamine, diethylamine, di-n-propylamine, diisopropylamine, di-n-butylamine and di-t-butylamine; trialkylamines such as trimethylamine, triethylamine, and tri-n-propylamine and tri-n-butylamine.

Zeolite is normally used in an amount of $1 \times 10^{-2}$ to $1 \times 10^{2}$ g, preferably $1 \times 10^{-1}$ to 10 g, per g of the fine particle carrier. Organic amine is normally used in an amount of $1 \times 10^{-7}$ to $2 \times 10^{-2}$ mol, preferably $1 \times 10^{-5}$ to $1 \times 10^{-2}$ mol, per g of the fine particle carrier.

The use of zeolite and organic amine in the preparation of the catalyst makes possible the preparation of a solid catalyst with the transition metal complex (a) supported at a high supporting rate.

It is desirable that in a solid catalyst obtained as described above, the transition metal complex (a) should be supported in an amount of $10^{-6}$ to $10^{-3}$ grams atom, preferably $2 \times 10^{-6}$ to $3 \times 10^{-4}$ grams atom, calculated as transition metal atom, and per g of the fine particle carrier, and alumoxane (d) [or the organoaluminum compound (c)] should be supported in an amount of approx. $10^{-3}$ to $10^{-1}$ grams atom, preferably $2 \times 10^{-3}$ to $5 \times 10^{-2}$ grams atom, calculated as aluminum atom, per g of the fine particle carrier. It is also desirable that (b) should be supported in the amount of $10^{-7}$ to 0.1 grams atom, preferably $2 \times 10^{-7}$ to $3 \times 10^{-2}$ grams atom as boron atom in (b), per g of the fine particle carrier.

The atactic poly-α-olefin polymers, specifically ethylene/α-olefin copolymers, more specifically ethylene/propylene copolymers, of the present invention themselves may be used for various uses. They are also used in the form of compositions obtained by blending them with other thermoplastic resins, such as crystalline polypropylene, crystalline polybutene, crystalline 4-methyl-1-pentene polymer, polyethylene terephthalate, polyamide and polycarbonate. Such blending will improve the impact resistance, flexibility and other properties of those thermoplastic resins.

Particularly, the atactic α-olefin polymers of the present invention, especially a composition comprising 5 to 80 wt% of an ethylene/propylene copolymer, 10 to 80 wt% of a crystalline polypropylene polymer and, as required, 10 to 80 wt% of an elastomer has especially excellent rigidity, heat resistance and impact resistance.

These compositions of the poly-α-olefin polymers may be obtained by solution-blending, dry blending such as melt-blending or multi-stage polymerization such as parallel polymerization and consecutive polymerization.

In this case, it is possible to manufacture the aforementioned compositions of the poly-α-olefin polymers by polymerizing olefins in one stage or in not less than 2 stages by using at least two different catalysts.

It is desirable to use for such at least two catalysts a combination of at least one catalyst selected from between the α-olefin polymerization catalyst (1) mentioned below and the α-olefin polymerization catalyst (2) mentioned below and at least one catalyst selected from between the α-olefin polymerization catalyst (3) mentioned below and the α-olefin polymerization catalyst (4) mentioned below.

Next, a method for manufacturing compositions based on the aforementioned polyolefins by using not less than two catalysts, taking the case of a propylene polymer as an example.

Olefin polymers such a polypropylene polymer are used for a wide range of uses because of their excellent rigidity, heat resistance, impact resistance and other properties.

As a method for further improving the flexibility and impact strength of such olefin polymers, a method for manufacturing block copolymer by copolymerizing propylene and ethylene after homopolymerizing propylene, for example, is known.

As a method for further increasing the impact strength of the olefin polymers, blending elastomers to polypropylene is also known.

However, since such block copolymer and polypropylene with which elastomer is blended has inferior optical properties such as transparency, range of uses has been limited.

Moreover, blending atactic polypropylene with polypropylene to improve the properties of polypropylene is described in Laid-open Patent HEI 6-263934, for example.

In recent years, there has been an increasingly severer demand for the physical properties of olefin polymers such as polypropylene, and it is desired that those olefin polymer compositions which have much better properties will come into existence.

The use of propylene-based atactic copolymer of the present invention enables olefin polymer compositions to develop various elastic moduli as well as gain excellent optical properties, mechanical properties and scratch resistance.

Examples of such propylene-based atactic copolymer include copolymers such as ethylene/propylene copolymer and propylene/1-butene copolymer and terpolymers such as ethylene/propylene/1-butene copolymer, ethylene/propylene/3-methyl-1-butene and ethylene/propylene/nonconjugated diene.

Out of the aforementioned propylene-based atactic copolymers, ethylene/propylene copolymer and ethylene/propylene/1-butene copolymer are preferable.

It is also possible to use a combination of not less than two of the aforementioned propylene-based atactic copolymers and a combination of one such propylene-based atactic copolymer and another α-olefin copolymer.

In addition, stabilizers, inorganic fillers, crystalline nucleating agents, lubricants, plasticizers, pigments, etc. may be added to the aforementioned propylene-based atactic copolymers as required.

In using these propylene-based atactic copolymers, their propylene content may preferably be preferably 20 to 99 wt%.

As another α-olefin copolymer, polymers using an olefin having 2 to 10 carbon atoms as the main component are preferable, and especially polymers using ethylene or propylene as the main component are more preferable.

The intrinsic viscosity [η] of the aforementioned propylene-based atactic copolymers may preferably be in a range of 0.5 to 10 dl/g, more preferably 1.0 to 8.0 dl/g.

Furthermore, the degree of crystallinity of these polymers may preferably be not more than 5%. Moreover it is desirable that the iodine value is not more than 16.

The aforementioned propylene-based atactic copolymers may be grafted with aromatic vinyl or vinylsilane compound, unsaturated carboxylic acid, unsaturated carboxylic acid ester and unsaturated acid anhydride.

For example, in blending the aforementioned propylene-based atactic copolymers with isotactic polypropylene, the blending ratio of isotactic polypropylene to propylene atactic copolymer is preferably 1 to 95 wt%/5 to 99 wt%, and 1 to 30 wt% of another α-olefin copolymer and 0.01 to 2 wt% of an additive may be added as required.

Below are given examples of process for preparing a blend of the aforementioned polypropylene and propylene-based atactic copolymer.

A method in which polypropylene, propylene-based atactic polymer and as required an α-olefin copolymer other than the aforementioned materials are melted and mixed.

A method in which after an isotactic propylene polymer and a propylene-based atactic copolymer are melted and mixed, the resultant composition is melted and mixed with an α-olefin copolymer other than the aforementioned materials.

A method in which an isotactic propylene copolymer and a propylene-based atactic copolymer are manufactured by polymerizing olefins including propylene in the presence of at least two types of catalyst by a one-step or not less than two-step polymerization process and the resultant composition is melted and mixed with an α-olefin copolymer other than the aforementioned materials.

The propylene-based atactic copolymers of the present invention, singly by themselves and in the form of compositions with other thermoplastic resins such as crystalline polyolefin resin, can be processed easily into desired forms by various methods such as injection-molding, calendering and extrusion. They can be used for a broader range of uses than before, including the housings of household electric appliances, film or sheet applications, transparent container applications such as infusion solution bags and small bottles, interior automotive trim applications, exterior automotive trim applications such as bumper side moles and sundry goods applications.

The compositions containing 10 to 95 wt%, preferably 20 to 85 wt%, more preferably 30 to 50 wt%, of an isotactic crystalline polyolefin such as isotactic polypropylene and as required 10 to 80 wt% of elastomer as well as 5 to 90 wt%, preferably 15 to 80 wt%, more preferably 50 to 80 wt%, of the aforementioned atactic poly-α-olefin polymer can be manufactured by polymerizing α-olefin monomers in the presence of at least two types of catalysts.

As examples of the method for preparing such olefin polymer compositions, the following methods can be cited:

① Method in which atactic poly-α-olefin polymer and crystalline olefin polymer are melted and mixed.

② Method in which an atactic poly-α-olefin polymer and crystalline isotactic olefin polymer are manufactured by polymerizing α-olefins such as propylene in the presence of at least two types of catalyst by a one-stage or not less than two-stage polymerization process to prepare an olefin polymer composition.

The method conventionally known to the public may be used widely as the melting and mixing method

described in the above method ①. As the melting and mixing equipment, mixing rolls and intensive mixers, such as a Banbury mixer, kneader and single-screw mixer and twin-screw mixer, may be used.

It is desirable that the melting and mixing should be carried out normally at 150 to 280°C, preferably 170 to 240°C, normally for 1 to 20 min., preferably 1 to 10 min.

After the melting and mixing operation, the composition is normally obtained in the form of pellets.

As an example of such manufacturing method described in above ②, there is a method for manufacturing poly-α-olefin polymer compositions wherein the aforementioned at least two catalysts are at least one catalyst selected from between the α-olefin polymerization catalyst (1) mentioned below and the α-olefin polymerization catalyst (2) mentioned below and at least one catalyst selected from between the α-olefin polymerization catalyst (3) mentioned below and the α-olefin polymerization catalyst (4) mentioned below.

Olefin polymerization catalyst (1):
A catalyst comprising:

(A) A racemic form of a transition metal compound (A-1) represented by the aforementioned following formula (II).
(B)

(B-1) An organic aluminumoxy compound and/or
(B-2) a compound ($B^1$-2) which reacts with the aforementioned transition metal compound (A-1) to form an ion pair; and as required; and

(C) an organoaluminum compound.

Olefin polymerization catalyst (2):
A catalyst comprising:

(A) Solid-state titanium catalyst component (T) containing magnesium, titanium, halogen and an electron donor as the essential components,
(B) Organometallic catalyst component (Q), and
(C) Silicon compound (S) represented by the following formula (i) or a compound (E) having not less than 2 ether linkages existing via two or more atoms:

$$Rp_n\text{-Si-}(ORq)_{4-n} \qquad (i)$$

(wherein n is 1, 2 or 3; when n is 1, Rp stands for a secondary or tertiary hydrocarbon group; when n is 2 or 3, at least 1 of Rp's stands for a secondary or tertiary hydrocarbon group, with the rest of Rp's being hydrocarbon groups, and two or more Rp's may be the same or different; Rq is a hydrocarbon group having 1 to 4 carbon atoms, and when 4-n is 2 or 3, Rq may be the same or different.)

Olefin polymerization catalyst (3):
A catalyst comprising:

(A) A meso form of a transition metal compound (A-2) represented by the aforementioned formula (I);
(B)

(B-1) An organic aluminumoxy compound or
(B-2) A compound ($B^2$-2) which reacts with the aforementioned transition metal compound (A) to form an ion pair;

and as required,
(C) An organoaluminum compound.

Olefin polymerization catalyst (4):
A catalyst comprising:

(A) A transition metal compound (A-3)represented by the aforementioned formula (III),
(B)

(B-1) An organic aluminumoxy compound or

(B-2) A compound ($B^3$-2) which reacts with the aforementioned transition metal compound (A-3) to form an ion pair; and as required,

(C) An organoaluminum compound.

More specifically, olefin polymerization catalyst (1) is a racemic form of a transition metal compound represented by the aforementioned formula(II).
In these catalysts, examples of (C)an organoaluminum compound are same as those of the aforementioned an organoaluminum compound(c).
Olefin polymerization catalyst (2) consists of:

(A) Solid-state titanium catalyst component (T) containing magnesium, titanium, halogen and an electron donor as the essential components;
(B) Organometallic catalyst component (M); and
(C) Silicon compound (S) represented by the following formula (i) or a compound (E) having not less than 2 ether linkages existing via two or more atoms:

$$Rpn\text{-}Si\text{-}(ORq)4\text{-}n \quad (i)$$

The solid titanium catalyst component (T), which is the catalyst component (A) can be prepared by bringing a magnesium compound, titanium compound and electron donor as mentioned below into contact with one another.
As a specific example of the titanium compound used in the preparation of the solid titanium catalyst component (T), the quadrivalent titanium compound represented by the following formula:

$$Ti(OR)nX4\text{-}n$$

(wherein R stands for a hydrocarbon group, X stands for halogen atom, and n is $0 \leqq n \leqq 4$.)
Specific examples of such titanium compound include titanium tetrahalides such as $TiCl_4$, $TiBr_4$ and $TiI_4$; alkoxytitanium trihalides such as $Ti(OCH_3)Cl_3$, $Ti(OC_2H_5)Cl_3$, $Ti(On\text{-}C_4H_9)Cl_3$, $Ti(OC_2H_5)Br_3$ and $Ti(Oiso\text{-}C_4H_9)Br_3$; dialkoxytitanium dihalides such as $Ti(OCH_3)_2Cl_2$, $Ti(OC_2H_5)_2Cl_2$, and $Ti(On\text{-}C_4H_9)_2Cl_2$ and $Ti(OC_2H_6)_2Br_2$; trialkoxytitanium monohalides such as $Ti(OCH_3)_3Cl$, $Ti(OC_2H_5)_3Cl$, $Ti(On\text{-}C_4H_9)_3Cl$ and $Ti(OC_2H_5)_3Br$; tetraalkoxy titaniums such as $Ti(OCH_3)_4$, $Ti(OC_2H_5)_4$, $Ti(On\text{-}C_4H_9)_4$, and $Ti(Oiso\text{-}C_4H_9)_4$ and $Ti(O\text{-}2\text{-}ethylhexyl)_4$.
Out of these, a halogen-containing titanium compound is preferable; titanium tetrahalide is more preferable; and titanium tetrachloride is especially preferable. These titanium compounds may be used singly or in combination with not less than two of them. Furthermore, these titanium compounds may be diluted in a hydrocarbon compound or a halogenated hydrocarbon compound.
As examples of the magnesium compound used in the preparation of the solid titanium catalyst component (T), a magnesium compound having reducing ability and a magnesium compound not having reducing ability.
Examples of such magnesium compound having reducing ability include include magnesium compounds having a magnesium-carbon bond or magnesium-hydrogen bond. Examples of the magnesium compound having reducing ability include dimethylmagnesium, diethylmagnesium, dipropylmagnesium, dibutylmagnesium, diamylmagnesium, dihexylmagnesium, didecylmagnesium, ethylmagnesium chloride, propylmagnesium chloride, butylmagnesium chloride, hexylmagnesium chloride, amylmagnesium chloride, butylethoxymagnesium, ethylbutylmagnesium and butylmagnesiuim hydride.
These magnesium compounds may be used singly or in the form of a complex compound formed with an organometallic compound described below. Furthermore, these magnesium compounds may be a liquid or a solid or may be derived by reacting metal magnesium with a corresponding compound. Moreover, they can be derived from metal magnesium by using the aforementioned method in the course of preparing the catalyst.
Examples of the magnesium compound not having reducing ability include magnesium halides such as magnesium chloride, magnesium bromide, magnesium iodide, magnesium fluoride; alkoxymagnesium halides such as methoxymagnesium chloride, ethoxymagnesium chloride, isopropoxymagnesium chloride, butoxymagnesium chloride and octoxymagnesium chloride; aryloxymagnesium halides such as phenoxymagnesium chloride and methylphenoxymagnesium chloride; alkoxymagnesium such as ethoxymagnesium, isopropoxymagnesium, butoxymagnesium, n-octoxymagnesium and 2-ethylhexoxymagnesium; aryloxymagnesiums such as phenoxymagnesium and dimethylphenoxymagnesium; magnesium carbonates such as magnesium laurate and magnesium stearate.
These magnesium compound not having reducing ability may be a compound derived from the aforementioned magnesium compound having reducing ability or a compound derived in the course of preparing the catalyst component. The derivation of the magnesium compound not having reducing ability from the magnesium compound

having reducing ability can be accomplished, for example, by bringing magnesium compound having reducing ability into contact with halogen, polysiloxane compound, halogen-containing silane compound, halogen-containing aluminum compound, or compounds having active carbon-oxygen bonds such as alcohol, ester, ketone and aldehyde.

Further, in the present invention, the magnesium compound may be not only a magnesium compound having reducing ability or a magnesium compound not having reducing ability but also a complex compound of the aforementioned magnesium compound and another metal, a composite compound or a mixture of the magnesium compound with another metal comound. Furthermore, a combination of not less than two of the aforementioned compounds may be used.

As the magnesium compound used in the preparation of the solid titanium catalyst component (T), many magnesium compounds in addition to the aforementioned ones may be used However, it is desirable that such magnesium compound should take the form of a halogen-containing magnesium compound in the solid titanium catalyst component (T) finally obtained. Consequently, it is desirable in the case of using a magnesium compound not containing halogen that it should be brought into contact for reaction with a halogen-containing compound in the course of the preparation.

Out of the aforementioned magnesium compounds, magnesium compounds not having reducing ability are preferable; halogen-containing magnesium compounds are more preferable; and magnesium chloride, alkoxymagnesium chloride and aryroxymagnesium chloride are especially preferable.

The solid titanium catalyst component (T) used in the present invention is formed by bringing such magnesium compound and the titanium compound and electron donor as mentioned above into contact with one another.

Specific examples of the electron donor used in the preparation of solid titanium catalyst component (T) include the following compounds: Amines such as methylamine, ethylamine, dimethylamine, diethylamine, ethylenediamine, tetramethylenediamine, hexamethylenediamine, tributylamine and tribenzylamine; pyrroles such as pyrrole, methylpyrrole and dimethylpyrrole; pyrroline: pyrrolidine; pyridines such as, indol, pyridine, methylpyridine, ethylpyridine, propylpyridine, dimethylpyridine, ethylmethylpyridine, trimethylpyridine, phenylpyridine, benzylpyridine and chloropyridine; nitrogen-containing cyclic compounds such as piperidines, quinolines and isoquinolines; oxygen-containing cyclic compounds such as tetrahydrofuran, 1,4-cineol, 1,8-cineol, pynolfuran, methylfuran, dimethylfuran, diphenylfuran, benzofuran, cumaran, phthalan, tetrahydropyran, pyran and ditedropyran ;alcohols containing 1 to 18 carbon atoms such as methanol, ethanol, propanol, pentanol, hexanol, octanol, 2-ethylhexanol, dodecanol, octadecy alcohol, oleyl alcohol, benzyl alcohol, phenylethyl alcohol, cumyl alcohol, isopropyl alcohol and isopropylbenzyl alcohol; phenols having 6 to 20 carbon atoms, which may contain lower alkyl groups, such as phenol, cresol, xylenol, ethylphenol, propylphenol, nonylphenol, cumylphenol and naphthol; ketones having 3 to 15 carbon atoms such as aceton, methylethylketone, methylisobutylketone, acetophenone, benzophenone, acetylacetone and benzoquinone; aldehydes having 2 to 15 carbon atoms such as acetoaldehyde, propyonaldehyde, octylaldehyde, benzaldehyde, tolualdehyde and naphthaldehyde; organic acid esters having 2 to 30 carbon atoms such as methyl formate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl cyclohexanecaboxylate, methyl benzoate, ethyl benzoate, propyl benzoate, butyl benaoate, octyl benzoate, cyclohexyl benzoate, phenyl benzoate, benzyl benzoate, methyl toluate, ethyl toluate, amyl toluate, ethyl ethylbenzoate, methyl anisate, n-butyl maleate, diisobutyl methylmalonate, di-n-hexyl cyclohexanecarboxylate, diethyl nadiate, diisopropyl tetrahydrophthalate, diethyl phthalate, diisobutyl phthalate, di-n-butyl phthalate, di-2-ethylhexyl phthalate, $\gamma$-butyrolactone, $\delta$-valerolactone, cumarine, phthalide and ethyl carbonate; acid halides having 2 to 15 carbon atoms such as acetyl chloride, benzoyl chloride, toluyl chloride and anisic acid chloride; ethers having 2 to 20 carbon atoms such as methyl ether, ethyl ether, isopropyl ether, butyl ether, amyl ether, anisol and diphenyl ether epoxy-p-menthane; diethers such as 2-isopentyl-2-isopropyl-1,3-dimethoxypropane, 2,2-diisobutyl-1,3-dimethoxypropane, 2,2-diisopropyl-1,3-dimethoxypropane, 2-cyclohexylmethyl-2-isopropyl-1,3-dimethoxypropane, 2,2-diisopentyl-1,3-dimethoxypropane, 2-isobutyl-2-isopropyl-1,3-dimethoxypropane, 2-cyclohexyl-2-isopropyl-1,3-dimethoxypropane, 2-cyclopentyl-2-isopropyl-1,3-dimethoxypropane, 2,2-dicyclopentyl-1,3-dimethoxypropane, 1,2-bis-methoxymethyl-bicyclo-[2,2,1]-heptane, diphenyldimethoxysilane, isopropyl-t-butyldimethoxysilane, 2,2-diisobutyl-1,3-demethoxycyclohexane, 2-isopentyl-2-isopropyl-1,3-dimethoxycyclohexane and 9,9-dimethoxymethylfluorene; acid amides such as acetic amide, benzoic amide and toluamide; nitriles such as acetonitrile, benzonitrile and tolunitrile; acid anhydrides such as acetic anhydride, phtharic anhydride and benzoic anhydride.

In addition to these, water, anion, cation and non-ion surfactants may be used.

Further, as a preferable example of the organic acid ester, multivalent carboxylic acid ester having the skeleton represented by the following general formula can be cited:

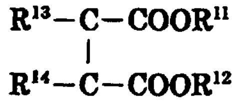 , 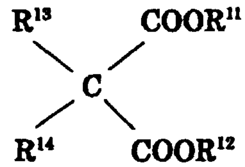 又は

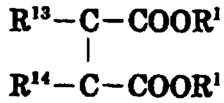

In the above formula, $R^{11}$ stands for a substituted or non-substituted hydrocarbon group; $R^{12}$, $R^{15}$ and $R^{16}$ stand for hydrogen or a substituted or non-substituted hydrocarbon group; and $R^{13}$ and $R^{14}$ stand for hydrogen or a substituted or non-substituted hydrocarbon group, preferably at least one of them being a substituted or non-substituted hydrocarbon group. Further, $R^{13}$ and $R^{14}$ may be connected to form a ring structure. The substituent group in the case of the hydrocarbon groups $R^{11}$ to $R^{16}$ being substituted contains hetero atoms such as N, O and S and has groups such as C-O-C, COOR, COOH, OH, $SO_3H$, -C-N-C- and $NH_2$, for example.

Specific examples of such multivalent carboxylic acid ester include aliphatic polycarboxylic acid esters such as diethyl succinate, dibutyl succinate, diethyl methylsuccinate, diisobutyl α-methylglutarate, diethyl methylmalonate, diethyl ethylmalonate, diethyl isopropylmalonate, diethyl butylmalonate, diethyl phenylmalonate, diethyl diethylmalonate, diethyl dibutylmalonate, monooctyl maleate, dioctyl maleate, dibutyl maleate, dibutyl butylmaleate, diethyl butylmaleate, diisopropyl β-methylglutarate, diallyl ethylsuccinate, 2-ethylhexyl fumarate, diethyl itaconate and dioctyl citraconate; alicyclilc polycarboxylic acid esters such as diethyl 1,2-cyclohexane caboxylate, diisobutyl 1,2-cyclohexane caboxylate, dithyl tetrahydrophthalate and diethyl nadiate; aromatic polycaboxylic acid esters such as monoethyl phthalate, dimethyl phthalate, methylethyl phthalate, monoisobutyl phthalate, diethyl phthalate, ethylisobutyl phthalate, di-n-propyl phthalate, diisopropyl phthalate, di-n-butyl phthalate, diisobutyl phthalate, di-n-heptyl phthalate, di-2-ethylhexyl phthalate, di-n-octyl phthalate, dineopentyl phthalate, didecyl phthalate, benzylbutyl phthalate, diphenyl phthalate, diethyl naphthalenedicarboxylate, dibutyl naphthalenedicarboxylate, triethyl trimellitate and dibutyl trimellitate; and esters of heterocyclic polycarboxylic acids such as 3,4-furandicarboxylic acid.

Other examples of such multivalent carboxylic acid ester include esters of long-chain dicarboxylic acid such as diethyl adipate, diisobutyl adipate, diisopropyl sebacate, di-n-butyl sebacate, di-n-octyl sebacate and di-2-ethylhexyl sebacate.

Moreover, as the electron donor, silicon compounds represented by the general formula (i) described below can also be used.

These compounds may also be used in a combination of not less than two of them.

Further, in bringing such titanium compound, magnesium compound and electron donor into contact with one another, the solid titanium catalyst component (a) supported on a carrier may be prepared by using the following carrier compounds.

As examples of such carrier compounds, resins such as $Al_2O_3$, $SiO_2$, $B_2O_3$, MgO, CaO, $TiO_2$, ZnO, $ZnO_2$, $SnO_2$, BaO, ThO and styrene-divinyl benzene copolymers can be cited. Out of these carrier compounds, $SiO_2$, $Al_2O_3$, MgO, ZnO and $ZnO_2$ can be cited as preferable examples.

Further, the aforementioned component may be brought into contact in the presence of other reaction agents such as silicon, phosphor and aluminum.

As for the method for manufacturing the solid titanium catalyst component (a), it is possible to manufacture it, for example, by bringing the titanium compound, magnesium compound and electron donor as mentioned above into contact, and all methods including the ones known to the public may be used.

Several specific methods for manufacturing the solid titanium catalyst component (a) are described briefly below.

(1) Method in which a solution comprising a magnesium compound, electron donor and hydrocarbon solvent reacts with an organometallic compound to precipitate a solid, and while the solid is being precipitated or after the solid is precipitated, the solid is made to contact and react with a titanium compound.

(2) Method in which after a complex comprising a magnesium compound and an electron donor contact and react with an organometallic compound, they are made to contact and react with a titanium compound.

(3) Method in which a material obtained by cotacting an inorganic carrier and an organic magnesium compound is made to contact and react with a titanium compound and preferably with an electron donor. In this case, such material may contact and react with a halogen-containing compound and/or an organometallic compound in advance.

(4) Method in which a magnesium compound supported on an inorganic or organic carrier is first obtained from a mixture of an inorganic or organic carrier and a solution containing a magnesium compound, an electron donor and as optional a hydrocarbon solvent, and then is made to contact with a titanium compound.

(5) Method in which an inorganic or organic carrier and a solution containing a magnesium compound, a titanium compound, an electron donor and as optional a hydrocarbon solvent are brought into contact to obtain a solid titanium catalyst component on which magnesium and titanium are supported.

(6) Method in which an organomagnesium compound in a liquid state is made to contact and react with a halogen-containing titanium compound. In this method, an electron donor is used at least once.

(7) Method in which after an organic magnesium compound in a liquid state is made to contact and react with a halogen-containing titanium compound, they are brought into contact with a titanium compound. In this method, an electron donor is used at least once.

(8) Method in which an alkoxy group-containing magnesium compound is made to contact and react with a halogen-containing titanium compound. In this method, an electron donor is used at least once.

(9) Method in which a complex comprising an alkoxy group-containing magnesium compound and an electron donor is made to contact and react with a titanium compound.

(10) Method in which after a complex comprising an alkoxy group-containing magnesium compound and an electron donor is made to contact and react with an organometallic compound, and then with a titanium compound.

(11) Method in which a magnesium compound, an electron donor and a titanium compound are made to contact and react with one another in an arbitrary order. Before this reaction, each of the components may be preliminary treated by a reaction co-agent such as an electron donor and/or an organometallic compound and a halogen-containing silicon compound. Further, through this method, it is preferable to use the aforementioned electron donor at least once.

(12) Method in which a liquid-state magnesium compound not having reducing ability and a liquid-state titanium compound are made to react with each other preferably in the presence of an electron donor to precipitate a solid-state magnesium • titanium composite.

(13) Method in which the reaction product obtained by method (12) is further made to react with a titanium compound.

(14) Method in which the reaction product obtained by method (11) or (12) is further made to react with an electron donor and a titanium compound.

(15) Method in which the solid-state material obtained by grinding a magnesium compound, preferably an electron donor and a titanium compound is treated with any of halogen, a halogenated compound and an aromatic hydrocarbon. This method may include a step of grinding either an magnesium compound alone, or a complex compound comprising a magnesium compound and an electron donor, or a magnesium compound and a titanium compound. Furthermore, after the grinding, the ground product may be pretreated with an reaction co-agent, and then with halogen, for example. As an example of the reaction co-agent, an organometallic compound and a halogen-containing silicon compound can be cited.

(16) Method in which after a magnesium compound is ground, the ground product is made to contact and react with a titanium compound. In this case, it is preferable to use an electron donor or a reaction co-agent at the time of grinding and/or contact/reaction.

(17) Method in which a compound obtained by methods (11) to (16) above are treated with halogen or a halogen compound or an aromatic hydrocarbon.

(18) Method in which the product of the contact/reaction of a metallic oxide, organic magnesium and a halogen-containing compound is brought into contact preferably with an electron donor and a titanium compound.

(19) Method in which a magnesium compound such as magnesium salt of organic acid, alkoxymagnesium and aryloxymagnesium is made to react with titanium compound and/or a halogen-containing hydrocarbon and preferably an electron donor.

(20) Method in which a hydrocarbon solution containing at least a magnesium compound and alkoxytitanium are brought into contact with a titanium compound and/or an electron donor. It is preferable that this is carried out in the presence of a halogen-containing compound such as a halogen-containing silicon compound.

(21) Method in which a liquid-state magnesium compound not having reducing ability and an organometallic compound are reacted to precipitate a solid-state magnesium • metal (aluminum) composite, and the composite is made to react with an electron donor and a titanium compound.

The amount of each of the aforementioned components used in the preparation of the solid titanium catalyst component (a) differs with manufacturing method and cannot be specified unconditionally. However, an electron donor

is used in an amount of 0.01 to 10 mol, preferably 0.1 to 5 mol, and a titanium compound is used in an amount of 0.01 to 1,000 mol, preferably 0.1 to 200 mol, per mol of the magnesium compound, for example.

The solid titanium catalyst component (T) thus obtained contains magnesium, titanium and an electron donor as the essential components.

In this solid titanium catalyst component (T), it is desirable that halogen/titanium (atomic ratio) should be in a range of approx. 2 to 200, preferably approx. 4 to 100, the aforementioned electron donor/titanium (molar ratio) should be in a range of approx. 0.01 to 100, preferably approx. 0.2 to 10, and magnesium/titanium (atomic ratio) should be in a range of approx. 1 to 100, preferably approx. 2 to 50.

Such solid titanium catalyst component (T) [catalyst component (A)] can be used in polymerization as the prepolymerized catalyst component(T') which is obtained by prepolymerizing(preliminary polymerizing) of olefins in the presence of the solid titanium catalyst component (T) and the organometallic catalyst component (q) mentioned below.

As the organometallic catalyst component (q) used in the preparation of the prepolymerized catalyst component(T'), the organometallic compound of the metals in the Group I to III of the periodic table are used, and specifically the following compounds are used.

(q-1) The same organic aluminumoxy compound as the aforementioned organic aluminumoxy compound (B-1) and the same organoaluminum compound as the aforementioned organoaluminum compound (c).

(q-2) A complex alkyl compound of a metal in the Group I of the periodic table and aluminum which is represented by the following formula:

$$M3AlR^{17}{}_4$$

(wherein M3 stands for Li, Na and K, $R^{17}$ is a hydrocarbon group having normally 1 to 15, preferably 1 to 4, carbon atoms.)

(q-3) A dialkyl compound of a metal in the Group II or III of the periodic table represented by the following formula:

$$R^{17}R^{18}M4$$

(wherein M4 stands for Mg, Zn or Cd, $R^{17}$ is the same as described above, and $R^{18}$ stands for a hydrocarbon group having normally 1 to 15, preferably 1 to 4, carbon atoms.)

Out of these an organoaluminum compound is preferably used.

Examples of the olefins used in the preparation of the prepolymerized catalyst component(T') include linear olefins such as ethylene, propylene, 1-butene, 1-pentene, 1-hexene, 1-octene, 1-decene, 1-dodecene, 1-tetradecene, 1-hexadecene, 1-octadecene and 1-eicosene; branched olefins such as 3-methyl-1-butene, 3-methyl-1-pentene, 3-ethyl-1-pentene, 4-methyl-1-pentene, 4-methyl-1-hexene, 4,4-dimethyl-1-hexene, 4,4,-dimethyl-1-pentene, 4-ethyl-1-hexene, 3-ethyl-1-hexene, allylnaphthalene, allyl norbornane, styrene, dimethylstyrenes, vinylnaphthalene, allyl toluene, allylbenzene, vinylcyclohexane, vinylcyclopentane, vinylcycloheptane and allyltrialkylsilanes.

In the prepolymerization, a considerably higher concentration of a catalyst than that of the catalyst in the system in the main polymerization may be used.

It is desirable that the concentration of the solid titanium catalyst component (T) in preliminary polymerization should be in a range of normally approx. 0.01 to 200 millimols, preferably approx. 0.05 to 100 millimols as titanium atom per liter of the inert hydrocarbon medium mentioned below.

The organometallic catalyst component (q) should only be used in the amount that 0.1 to 1,000 g, preferably 0.3 to 500 g, of a polymer can be formed per g of the solid titanium catalyst component (T), and it is desirable that the amount of the organometallic catalyst component (q) should be in a range of normally approx. 0.1 to 100 millimols, preferably approx. 0.5 to 50 millimols, per mol of the titanium atom in the solid titanium catalyst component (a).

Furthermore, in carrying out prepolymerization, an electron donor (e) may be used in addition to the solid titanium catalyst component (T) and the organometallic catalyst component (b). Specific examples of this electron donor (e) include the electron donor mentioned above which is used in the preparation of the solid titanium catalyst component (T), the silicon compound (S) which is represented by the formula (i) shown below, a compound (E) having not less than two ether bonds existing via not less than two atoms, and the organic silicon compound represented by the following formula (c-i):

$$R_n\text{-Si-}(OR')_{4-n} \qquad \text{(c-i)}$$

(wherein R and R' stand for a hydrocarbon group, and n is $0<n<4$.)

Specific examples of such organic silicon compounds represented by the general formula (c-i) include trimethylmethoxysilane, trimethylethoxysilane, dimethyldimethoxysilane, dimethyldiethoxysilane, diisopropyldimethoxysilane, diphenyldimethoxysilane, phenylmethyldimethoxysiilane, diphenyldiethoxysilane, bis o-tolyldimethoxysilane, bis m-tolyldimethoxysilane, bis p-tolyldimethoxysilane, bis p-tolyldiethoxysilane, bisethyphenyl dimethoxysilane, ethyltrimethoxysilane, ethyltriethoxysilane, vinyltriethoxysilane, methyltrimethoxysilane, n-propyltriethoxysilane, decyltrimethoxysilane, decyltriethoxysilane, phenyltrimethoxysilane, γ-chloropropyltrimethoxysilane, methyltriethoxysilane, ethyltriethoxysilane, vinyltriethoxysilane, n-butyltriethoxysilane, phenyltriethoxysilane, γ-aminopropyltriethoxysilane, chlorotriethoxysilane, ethyltriisopropoxysilane, vinyltributoxysilane, ethylsilicate, butylsilicate, trimethyl phenoxy silane, methyltriallyloxysilane, vinyltris(β-methoxysilane), vinyltriacetoxysilane and dimethyltetraethoxydisilane.

These electron donor (e) may be used singly or in combination with not less than two of them.

The electron donor (e) is used in an amount of 0.1 to 50 mol, preferably 0.5 to 30 mol, more preferably 1 to 20 mol, per mol of the titanium atom in the solid titanium catalyst component (a).

It is desirable that at the prepolymerization, the aforementioned olefins and catalyst components are added to an inert hydrocarbon medium, and then polymerization should be conducted under mild conditions.

Specific examples of the inert hydrocarbon medium include aliphatic hydrocarbons such as propane, butane, pentane, hexane, heptane, octane, decane, dodecane and kerosene; alicyclic hydrocarbons such as cyclopentane, cyclohexane and methylcyclopentane; aromatic hydrocarbons such as benzene, toluene and xylene; and halogenated hydrocarbons such as ethylenechloride and chlorobenzene or products obtained by contacting one another. Out of these inert hydrocarbon media, it is especially preferable to use an aliphatic hydrocarbon.

The reaction temperature has only to be such temperature that the product formed by prepolymerization does not dissolve practically in the inactive hydrocarbon medium and is in a range of normally approx. -20 to +100°C, preferably approx. -20 to + 80°C, more preferably 0 to + 40°C.

Further, in the prepolymerization, a molecular weight modifier such as hydrogen may be used. It is desirable that such molecular weight modifier should be used in such amount that the intrinsic viscosity [η] of the polymer obtained by the prepolymerization is not less than approx. 0.2 dl/g, preferably approx. 0.5 to 10 dl/g, as measured in decalin at 135°C.

It is desirable that the prepolymerization should be conducted in such manner that approx. 0.1 to 1,000 g, preferably 0.3 to 500 g, of a polymer is formed per g of the solid titanium catalyst component (T).

Such prepolymerization may be conducted by the batch or continuous process.

The olefin polymerization catalyst (2) is composed of the aforementioned (A) solid-state titanium catalyst component (T) or prepolymerized catalyst(T'), the (B) organometallic catalyst component(Q) and the (C) silicon compound (S) or a compound (E) having not less than two ether bonds existing via not less than two atoms.

As the organometallic catalyst component(Q), the same material as the organometallic catalyst component (q) used in the preparation of the aforementioned prepolymerized catalyst component(T') may be used.

The silicon compound (S) used as the component (C) is a compound represented by the following formula (i):

$$Rp_n\text{-}Si\text{-}(ORq)_{4-n} \qquad (i)$$

(wherein n is 1, 2 or 3; when n is 1, Rp stands for a secondary or tertiary hydrocarbon group; when n is 2 or 3, at least 1 of Rp's stands for a secondary or tertiary hydrocarbon group, with the rest of Rp's being hydrocarbon groups, and two or more Rp's may be the same or different; Rq is a hydrocarbon group having 1 to 4 carbon atoms, and when 4-n is 2 or 3, Rq may be the same or different.)

As examples of the secondary or tertiary hydrocarbon group in the silicon compound (c) represented by the above formula (i), a cyclopentyl group, a cyclopentenyl group, a cyclopentadienyl group, these groups having a substituent group, and a hydrocarbon group whose carbon adjacent to Si is secondary or tertiary can be cited.

More specific examples can be cited as follows: Examples of substituted cyclopentyl group include cyclopentyl group

containing alkyl group such as 2-methylcyclopentyl group, 3-methylcyclopentyl group, 2-ethylcylopentyl group, 2-n-butylcyclopentyl group, 2,3-dimethylcyclopentyl group, 2,4-dimethylcyclopentyl group, 2,5-dimethylcyclopentyl group, 2,3,4-trimethylcyclopentyl group, 2,3,5-trimethylcyclopentyl group, 2,3,4-triethylcyclopentyl group, tetramethylcyclopentyl group and tetraethylcyclopentyl;

Examples of substituted cyclopentenyl group include cyclopentenyl group containing alkyl group such as 2-methylcyclopentenyl group, 3-methylcyclopentenyl group, 2-ethylcylopentenyl group, 2-n-butylcyclopentenyl group, 2,3-dimethylcyclopentenyl group, 2,4-dimethylcyclopentenyl group, 2,5-dimethylcyclopentenyl group, 2,3-diethylcyclopentenyl group, 2,3,4-trimethylcyclopentenyl group, 2,3,4-triethylcyclopentenyl group, tetramethylcyclopentenyl group and tetraethylcyclopentenyl group;

Examples of substituted cyclopentadienyl groups include cyclopentadienyl groups containing alkyl groups such as 2-methylcyclopentadienyl group, 3-methylcyclopentadienyl group, 2-ethylcylopentadienyl group, 2-n-butylcyclopentadienyl group, 2,3-dimethylcyclopentadienyl group, 2,4-dimethylcyclopentadienyl group, 2,5-dimethylcyclopentadienyl

group, 2,3-diethylcyclopentadienyl group, 2,3,4-trimethylcyclopentadienyl group, 2,3,5-trimethylcyclopentadienyl group, 2,3,4-triethylcyclopentadienyl group, 2,3,4,5-tetramethylcyclopentadienyl group, 2,3,4,5-tetraethylcyclopentadienyl group, 1,2,3,4,5-pentamethylcyclopentadienyl group and 1,2,3,4,5-pentaethylcyclopentadienyl group.

Furthermore, as examples of a hydrocarbon group whose carbon adjacent to Si is a secondary carbon, an i-propyl group, an s-butyl group, an s-amyl group and an $\alpha$-methyl benzyl group can be cited; and as examples of a hydrocarbon group whose carbon adjacent to Si is tertiary, a t-butyl group, a t-amyl group, an $\alpha$, $\alpha$'-dimethylbenzyl group and an adamantyl group can be cited.

Examples of the silicon compound (S) represented by the formula (i) wherein n is 1 include trialkoxysilanes such as cyclopentyltrimethoxysilane, 2-methylcyclopentyltrimethoxysilane, 2,3-dimethylcyclopentyltrimethoxysilane, cyclopentyltriethoxysilane, iso-butyltriethoxysilane, t-butyltriethoxysilane, cyclohexyltrimethoxysilane, cyclohexyltriethoxysilane, 2-norbornanetrimethoxysilane and 2-norbornanetriethoxysilane.

Examples of the silicon compound (c) represented by the formula (i) wherein n is 2 include dialkoxysilanes such as dicyclopentyl diethoxysilane, t-butylmethyl dimethoxysilane, t-butylmethyl diethoxysilane, t-amylmethyl diethoxysilane, dicyclohexyl dimethoxysilane, cyclohexylmethyl dimethoxysilane, cyclohexylmethyl diethoxysilane and 2-norbornanemethyl dimethoxysilane.

In the case of the silicon compound (S) represented by the formula (i) wherein n is 2, the dimethoxy compound represented by the following formula (ii) is preferable:

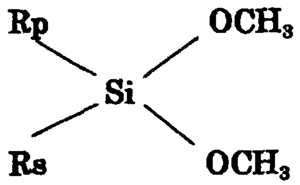

(ii)

In the above formula, Rp and Rs stands each independently for a cyclopentyl group, a substituted cyclopentyl group, a cyclopentenyl group, a substituted cyclopentenyl group, a cyclopentadienyl group, a substituted cyclopentadienyl group, and a hydrocarbon group whose carbon adjacent to Si is secondary or tertiary.

Examples of the silicon compound represented by the above (ii) include dicyclopentyl dimethoxysilane, dicyclopentenyl dimethoxysilane, dicyclopentadienyl dimethoxysilane, di-t-butyl dimethoxysilane, di(2-methylcyclopentyl) dimethoxysilane, di(3-methylcyclopentyl) dimethoxysilane, di(2-ethylcyclopentyl) dimethoxysilane, di(2,3-dimethylcyclopentyl) dimethoxysilane, di(2,4-dimethylcyclopentyl) dimethoxysilane, di(2,5-dmiethylcyclopentyl) dimethoxysilane, di(2,3-diethylcyclopentyl) dimethoxysilane, di(2,3,4-trimethylcyclopentyl) dimethoxysilane, di(2,3,5-trimethylcyclopentyl) dimethoxysilane, di(2,3,4-triethylcyclopentyl) dimethoxysilane, di(tetramethylcyclopentyl) dimethoxysilane, di(tetraethylcyclopentyl) dimethoxysilane, di(2-methylcyclopentenyl) dimethoxysilane, di(3-methylcyclopentenyl) dimethoxysilane, di(2-ethylcyclopentenyl) dimethoxysilane, di(2-n-butylcyclopentenyl) dimethoxysilane, di(2,3-dimethylcyclopentenyl) dimethoxysilane, di(2,4-dimethylcyclopentenyl) dimethoxysilane, di(2,5-dimethylcyclopentenyl) dimethoxysilane, di(2,3,4-trimethylclopentenyl) di imethoxysilane, di(2,3,5-trimethylcyclopentenyl) dimethoxysilane, di(2,3,4-triethylcyclopentenyl) dimethoxysilane, di(tetramethylcyclopentenyl) dimethoxysilane, di(tetraethylcyclopentenyl) dimethoxysilane, di(2-methylcyclopentadienyl) dimethoxysilane, di(3-methylcyclopentadienyl) dimethoxysilane, di(2-ethylcyclopentadienyl)dimethoxysilane, di(2-n-butylcyclopentadienyl) dimethoxysilane, di(2,3-dimethylcyclopentadienyl) dimethoxysilane, di(2,4-dimethylcyclopentadienyl)dimethoxysilane, di(2,5-dimethylcyclopentadienyl) dimethoxysilane, di(2,3-diethylcyclopentadienyl) dimethoxysilane, di(2,3,4-trimethylcyclopentadienyl) dimethoxysilane, di(2,3,5-trimethylcyclopentadienyl) dimethoxysilane, di(2,3,4-triethylcyclopentadienyl) dimethoxysilane, di(2,3,4,5-tetramethylcyclopentadienyl)dimethoxysilane, di(2,3,4,5-tetraethylcyclopentadienyl) dimethoxysilane, di(1,2,3,4,5-pentamethylcyclopentadienyl) dimethoxysilane, di(1,2,3,4,5-pentaethylcyclopentadienyl) imethoxysilane, di-t-amyl dimethoxysilane, di($\alpha$,$\alpha$'-dimethylbenzyl) dimethoxysilane, di(admantyl) dimethoxysilane, admantyl-t-butyl dimethoxysilane, cyclopentyl-t-butyl dimethoxysilane, diisopropyl dimethoxysilane, di-s-butyl dimethoxysilane, di-s-amyl dimethoxysilane and isopropyl-s-butyl dimethoxysilane.

Examples of the silicon compound (S) represented by the formula (i) wherein n is 3 include monoalkoxysilanes such as tricyclopentyl methoxysilane, tricyclopentyl ethoxysilane, dicyclopentylmethyl methoxysilane, dicyclopentylethyl methoxysilane, dicyclopentyl methylethoxysilane, cyclopentyldimethyl methoxysilane, cyclopentyldiethyl methoxysilane and cyclopentyldimethyl ethoxysilane.

Out of these, dimethoxysilanes, particularly dimethoxysilane represented by the formula (ii), are preferable. Specifically, dicyclopentyldimethoxysilane, di-t-butyldimethoxysilane, di(2-methylcyclopentyl)dimethoxysilane, di(3-methylcyclopentyl) dimethoxysilane and di-t-amyldimethoxysilane are preferable.

These silicon compound (S) may be used in combination with not less than two of them.

In the compound (E) having not less than two ether bonds existing via not less than two atoms which is used as the component (C) (hereinafter sometimes referred to as "polyether compound"), the atoms existing between these ether bonds is not less than one selected from a group consisting of carbon, silicon, oxygen, sulfur, phosphor and boron, and the number of the atoms is not less than two. Out of these, preferable examples are those having a relatively high-volume substituent group, specifically a substituent group having not less than two, preferably not less than three carbon atoms and the linear chain, branched or ring structure, more preferably a substituent group having the branched or ring structure, bonded between the ether bonds. Moreover, a compound having those atoms existing between not less than two ether bonds which contain not less than two, preferably 3 to 20, more preferably 3 to 10, especially preferably 3 to 7 carbon atoms.

As examples of such polyether compound, the compounds represented by the following formula can be cited:

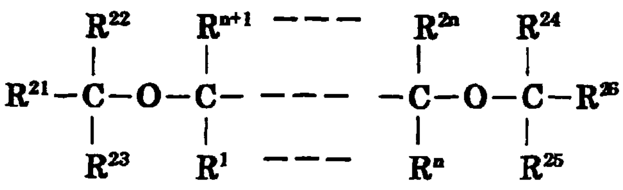

In the above formula, n is a whole number of 2≦n≦10; $R^1$ to $R^{26}$ stand for a substituent group having at least one selected from among carbon, hydrogen, oxygen, halogen, nitrogen, sulfur, phosphor, boron and silicon; any of $R^1$ to $R^{26}$, preferably $R^1$ to $R^{2n}$, may form jointly a ring other than the benzene ring; and an atom other than carbon atom may be contained in the main chain.

Specific examples of such polyether compound include 2-(2-ethylhexyl)-1,3-dimethoxy propane, 2-isopropyl-1,3-dimethoxy propane, 2-butyl-1,3-dimethoxy propane, 2-cyclohexyl-1,3-dimethoxy propane, 2-phenyl-1,3-dimethoxy propane, 2-cumyl-1,3-dimethoxy propane, 2-(2-phenylethyl)-1,3-dimethoxypropane, 2-(2-cyclohexylehyl)-1,3-dimethoxy propane, 2-(p-chloropheny)-1,3-dimethoxy propane, 2-(diphenylmethyl)-1,3-dimethoxy propane, 2-(1-naphthyl)-1,3-dimethoxy propane, 2-(2-fluorophenyl)-1,3-dimethoxy propane, 2-(1-decahydoronaphthyl)-1,3-dimethoxy propane, 2-(p-t-butylphenyl)-1,3-dimethoxypropane, 2,2-dicyclohexyl-1,3-dimethoxy propane, 2,2-dicyclopentyl-1,3-dimethoxy propane, 2,2-diethyl-1,3-dimethoxy propane, 2,2-dipropyl-1,3-dimethoxy propane, 2,2-diisopropyl-1,3-dimethoxy propane, 2,2-dibutyl-1,3-dimethoxy propane, 2-methyl-2-propyl-1,3-dimethoxy propane, 2-methyl-2-benzyl-1,3-dimethoxy propane, 2-methyl-2-ethyl-1,3-dimethoxy propane, 2-methyl-2-isopropyl-1,3-dimethoxy propane, 2-methyl-2-phenyl-1,3-dimethoxy propane, 2-methyl-2-cyclohexyl-1,3-dimethoxy propane, 2,2-bis(p-chlorophenyl)-1,3-dimethoxy propane, 2,2-bis(2-cyclohexylethyl)-1,3-dimethoxy propane, 2-methyl-2-isobutyl 1,3-dimethoxy propane, 2-methyl-2-(2-ethylhexyl)-1,3-dimethoxy propane, 2,2-diisobutyl-1,3-dimethoxy propane, 2,2-diphenyl-1,3-dimethoxy propane, 2,2-dibenzyl-1,3-dimethoxy propane, 2,2-bis(cyclohexylmethyl)-1,3-dimethoxy propane, 2,2-diisobutyl-1,3-diethoxy propane, 2,2-diisobutyl-1,3-dibuthoxy propane, 2-isobutyl-2-isopropyl-1,3-dimethoxy propane, 2-(1-methylbutyl)-2-isopropyl-1,3-dimethoxy propane, 2-(1-methylbutyl)-2-s-butyl-1,3-dimethoxy propane, 2,2-di-s-butyl-1,3-dimethoxy propane, 2,2-di-t-butyl-1,3-dimethoxy propane, 2,2-dineopentyl-1,3-dimethoxy propane, 2-isopropyl-2-isopentyl-1,3-dimethoxy propane, 2-phenyl-2-isopropyl-1,3-dimethoxy propane, 2-phenyl-2-s-butyl-1,3-dimethoxy propane, 2-benzyl-2-isopropyl-1,3-dimethoxy propane, 2-benzyl-2-s-butyl-1,3-dimethoxy propane, 2-phenyl-2-benzyl-1,3-dimethoxy propane, 2-cyclopentyl-2-isopropyl-1,3-dimethoxy propane, 2-cyclopentyl-2-s-butyl-1,3-dimethoxy propane, 2-cyclohexyl-2-isopropyl-1,3-dimethoxy propane, 2-cyclohexyl-2-s-butyl-1,3-dimethoxy propane, 2-isopropyl-2-s-butyl-1,3-dimethoxy propane, 2-cyclobexyl-2-cyclohexylmethyl-1,3-dimethoxy propane, 9,9-dimethoxymethyl fluorene, 2,3-diphenyl-1,4-diethoxybutane, 2,3-dicyclohexyl-1,4-diethoxybutane, 2,2-dibenzyl-1,4-diethoxybutane, 2,3-dicyclohexyl-1,4-diethoxybutane, 2,3-diisopropyl-1,4-diethoxybutane, 2,2-bis(p-methylphenyl)-1,4-dimethoxy butane, 2,3-bis(p-chloropbenyl)-1,4-dimethoxy butane, 2,3-bis(p-fluorophenyl)-1,4-dimethoxy butane, 2,4-diphenyl-1,5-dimethoxypentane, 2,5-diphenyl-1,5-dimethoxyhexane, 2,4-diisopropyl-1,5-dimethoxypentane, 2,4-diisobutyl-1,5-dimethoxypentane, 2,4-diisoamyl-1,5-dimethoxypentane, 3-methoxymethyl tetrahydrofurane, 3-methoxymethyldioxane, 1,3-diisobutoxypropane, 1,2-diisobutoxypropane, 1,2-diisobutoxyethane, 1,3-diisoamyloxypropane, 1,3-diisoneopentyloxyethane, 1,3-dineopentyloxypropane, 2,2-tetramethylene-1,3-dimethoxypropane, 2,2-pentamethylene-1,3-dimethoxypropane, 2,2-hexamethylene-1,3-dimethoxypropane, 1,2-bis(methoxymethyl)cyclohexane, 2,8-dioxaspiro[5,5]undecane, 3,7-dioxabicyclo[3,3,1]nonane, 3,7-dioxabicyclo[3,3,0]octane, 3,3-disobutyl-1, 5-oxononane, 6,6,-disobutyldioxyheptane, 1,1,-dimethoxymethylcyclopentane, 1,1,-bis(dimethoxymethyl)cyclohexane, 1,1-bis(methoxymethyl)bicyclo[2,2,1]heptane, 1,1-dimethoxymethylcyclopentane, 2-methyl-2-methoxymethyl-1,3-dimethoxypropane, 2-cyclohexyl-2-ethoxymethyl-1,3-diethoxypropane, 2-cyclohexyl-2-methoxymethyl-1,3-dimethoxypropane, 2,2-diisobutyl-1,3-dimethoxycyclohexane, 2-isopropyl-2-isoamyl-1,3-dimethoxycyclohexane, 2-cyclohexyl-2-methoxymethyl-1,3-dimethoxycyclohexane, 2-isopropyl-2-methoxymethyl-1,3-dimethoxycyclohexane, 2-isobutyl-2-methoxymethyl-1,3-dimethoxycyclohexane, 2-cyclohexyl-2-ethoxymethyl-1,3-diethoxycyclohexane, 2-cyclohexyl-2-ethoxymethyl-1,3-dimethoxycyclohexane, 2-isopropyl-2-ethoxymethyl-1,3-diethoxycylohexane, 2-isopropyl-2-ethoxymethyl-1,3-dimethoxycyclohexane, 2-isobutyl-2-ethoxymethyl-1,3-diethoxycyclohexane, 2-isobutyl-2-ethoxymethyl-1,3-dimethoxycyclohexane, tris(p-methoxyphenyl)phosphine, methylphenylbis(methoxymethyl)silane, diphenylbis(methoxymethy)silane, methylcyclohexylbis(methoxymethyl)silane, di-t-butylbis(methoxymethyl)silane, cyclohexyl-t-butylbis(methoxymethyl)silane, and i-propyl-t-butylbis(methoxymethyl)silane.

Out of these, 1,3-diethers are used preferably, and especially 2,2-diisobutyl-1,3-dimethoxypropane, 2-isopropyl-2-isopentyl-1,3-dimethoxypropane, 2,2-dicyclohexyl-1,3-dimethoxypropane, 2,2-bis(cyclohexylmethyl)-1,3-dimethoxypropane, and 9,9-dimethoxymethylfluorene.

These polyether compounds (E) may be used in combination with not less than two of them.

An non-atactic olefin polymer such as crystalline propylene polymer are manufactured by polymerizing an olefin or copolymerizing not less than two olefins in the presence of such olefin polymerization catalyst (2).

As examples of the olefins used in polymerization, there are the same α-olefin having 2 to 10 carbon atoms as described above and , in addition to this, the cyclic olefin, styrene, vinylcyclohexane and diene which have 3 to 20 carbon atoms. Furthermore, the same olefin having a branched structure as described above and a diene compound having 4 to 20 carbon atoms may be used.

In the present invention, it is preferable to use propylene singly or in combination with an α-olefin other than propylene.

In the polymerization, the aforementioned solid-state titanium catalyst component(T) or the prepolymerized catalyst component(T') are used in an amount of normally approx. 0.0001 to 50 millimols, preferably approx. 0.001 to 10 millimols, as converted in the titanium atom in the solid-state titanium catalyst component (T) or the prepolymerized catalyst component(T'), per liter of the polymerization volume. Further, the organometallic catalyst component(Q) is used in such amount that the amount of the metal atom in the organometallic catalyst component is normally approx. 1 to 2,000 mol, preferably approx. 2 to 500 mol, per mol of titanium metal in the polymerization zone. Furthermore, the silicon component (S) or a polyether compound (E) is used in such amount that the amount of the silicon or ether atom contained in it is normally approx. 0.001 to 50 mol, preferably approx. 0.01 to 20 mol, per mol of the metal atom in the organometallic catalyst component(Q).

In the polymerization, the electron donor used in the preparation of the solid titanium catalyst component (T) and/or the organic silicon compound represented by the aforementioned formula (c-i) may be used together.

The use of hydrogen in the polymerization enables an olefin polymer to show a high melt flow rate to be obtained. The molecular weight of the olefin polymer obtained can be adjusted with the addition amount of hydrogen.

The polymerization reaction is normally carried out in the state of slurry or in the gas phase.

In the case of conducting slurry polymerization, the same inert hydrocarbon as used in the preparation of the aforementioned prepolymerized catalyst component(T') may be used as the reaction solvent.

The polymerization temperature is set at normally approx. -50 to 200°C, preferably approx. 20 to 100°C, and the polymerization pressure is set at normally atmospheric pressure to 100 $kg/cm^2$, preferably approx. 2 to 50 $kg/cm^2$.

The polymerization may be conducted by any of the batch, semi-continuous and continuous processes.

On the other hand, it is desirable that the atactic propylene polymer should have intrinsic viscosity [η] in a range of 0.5 to 10 dl/g, preferably 1.0 to 5.0 dl/g.

It is also desirable that the mr/(mm + rr) value in the diad distribution as measured by NMR should be in a range of 0.7 to 1.3, preferably 0.8 to 1.2.

Out of them, the ethylene/propylene copolymers of the present invention are the copolymers that are identified as described above from the spectra in the zone of 19 to 23 ppm as obtained by measurement by means of $^{13}$CNMR.

In this case, the mr/(mm + rr) value in the diad distribution as measured by 13C-NMR was determined as described below. 50 to 70 mg of a sample was completely dissolved in a solvent comprising approx. 0.5 ml of hexachlorobutadiene, o-dichlorobenzene or 1,2,4-trichlorobenzene to which approx. 0.05 ml of benzene deuteride, a rock solvent, are added in an NMR sample tube (5 mm in diameter), and then the mr/(mm + rr) value was measured by proton decoupling method at 120°C. For the measuring conditions, a flip angle of 45° and a pulse interval of not less than 3.4 T1 (T1 is the longest value of the spin lattice relaxation time of the methyl group) were selected. Since the T1 of the methylene group and the methene group is shorter than that of the methyl group, the recovery of magnetization is not less than 99% under these conditions. The chemical shift was set at 21.59 ppm the methyl group of the third unit of the 5-propylene-unit chain whose methyl branches are in the same direction because of the connection of the top and the tail.

The spectrum in the methyl carbon area (19 to 23 ppm) can be classified into the first peak area (21.1 to 21.9 ppm), second peak area (20.3 to 21.0 ppm) and third peak area (19.5 to 20.3 ppm). Further, each peak of the spectrum was assigned by reference to literature [Polymer, 30(1989)1350].

Further, mr, mm and rr stand each for the three propylene unit chain represented by the following formula which is connected at the top and the tail:

mr :

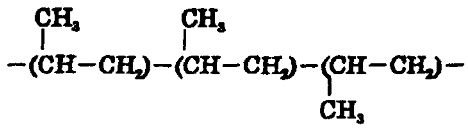

mm :

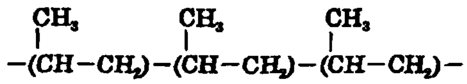

rr :

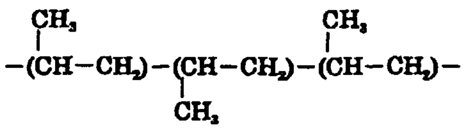

Further, the measurement of the 19 to 23 ppm zone by means of $^{13}$CNMR was made by determining the area of all the peaks of the signals appearing in each of the aforementioned zones of first, second and third to identify an ethylene/propylene copolymer.

The atactic olefin polymers such as the aforementioned atactic propylene polymer can be manufactured, for example,
by polymerizing $\alpha$-olefin such as propylene in the presence of the olefin polymerization catalyst (3) comprising:

(A) A meso form of a transition metal compound (A-2) represented by the aforementioned formula (I),
(B)

(B-1) An organic aluminumoxy compound or
(B-1) a compound ($B^2$-2)which reacts with the aforementioned transition metal compound (A-2) to form an ion pair; and as required,

(C) an organoaluminum compound;

or by polymerizing $\alpha$-olefin such as propylene in the presence of the olefin polymerization catalyst (4) comprising:

(A) A transition metal compound (A-3) represented by the following formula (II);
(B)

(B-1) An organic aluminumoxy compound or
(B-2) A compound ($B^3$-2) which reacts with the aforementioned transition metal compound (A-3) to form an ion pair; and as required, and as required

(C) An organoaluminum compound.

Next, below is given a specific description of the olefin polymerization catalyst (3) and the olefin polymerization catalyst (4).

Olefin polymerization catalyst (3) comprising:

(A) A meso form of a transition metal compound (A-2) represented by the aforementioned formula (I);
(B)

(B-1) An organic aluminumoxy compound and/or
(B-2) A compound ($B^2$-2) which reacts with the aforementioned transition metal compound (A-2) to form an ion

pair; and as required,

(C) An organoaluminum compound.

The transition metal compound (A-2) is the meso form of the transition metal compound represented by the aforementioned formula (I).

As a specific example of such transition metal compound (A-2), the meso form of the compound mentioned as the compound represented by the aforementioned formula (I) can be cited.

(B-1) The organic aluminumoxy compound, (B-2) compound ($B^2$-2) forming ion pairs by reacting with the aforementioned transition metal compound (A-2), and (C) organoaluminum compound which are used in the olefin polymerization catalyst (3) are the same as the (B-1) organic aluminumoxy compound, (B-2)compound ($B^1$-2)forming ion pairs by reacting with the aforementioned metal compound (A), and (C) organoaluminum compound which are used in the aforementioned olefin polymerization catalyst (1).

The atactic polymers can be manufactured by polymerizing an $\alpha$-olefin such as propylene in the presence of such olefin polymerization catalyst (3).

In the polymerization, it is desirable that the transition metal compound (A-2) should be used in an amount of normally $10^{-8}$ to $10^{-3}$ grams atom/liter, preferably $10^{-7}$ to $10^{-4}$ grams atom/liter, as the concentration of the transition metal atom derived from the transition metal compound (A-2) in the polymerization system. In the case of using the organic aluminumoxy compound (B-1) for the activating compound (B), the atomic ratio (Al/transition metal) of the aluminum in the organic aluminumoxy compound (B-1) to the transition metal in the transition metal compound (A-2) is in a range of normally 5 to 10,000, preferably 10 to 5,000. In the case of using the ionized ionic compound ($B^2$-2) as an activating compound (B), the molar ratio [(A-2)/($B^2$-2)] of the transition metal compound (A-2) to the ionized ionic compound ($B^2$-2) is in a range of normally 0.01 to 10, preferably 0.5 to 5. In the case of using the organoaluminum compound (C), the atomic ratio (Al/transition metal) of the aluminum in the organoaluminum compound (C) to the transition metal in the transition metal compound (A-2) is in a range of normally 5 to 10,000, preferably 10 to 5,000.

The solution-phase polymerization process is normally used in manufacturing atactic olefin polymers such as such propylene polymers. It is desirable that the polymerization temperature should be normally 0 to 250°C, preferably 20 to 200°C, and the polymerization pressure is normally atmospheric pressure to 100 kg/cm2, preferably atmospheric pressure to 50 kg/cm2.

The molecular weight of the atactic polymers thus obtained can be adjusted by causing hydrogen to be present in the polymerization system or changing polymerization temperature.

The olefin polymerization catalyst (4) consists of:

(A) A transition metal compound (A-3) represented by the aforementioned formula (II);
(B)

(B-1) An organic aluminumoxy compound or
(B-2) A compound ($B^3$-2) which reacts with the aforementioned transition metal compound (A-3) to form an ion pair; and as required,

(C) An organoaluminum compound.

The transition metal compound (A-3) is a compound represented by the following formula (III):

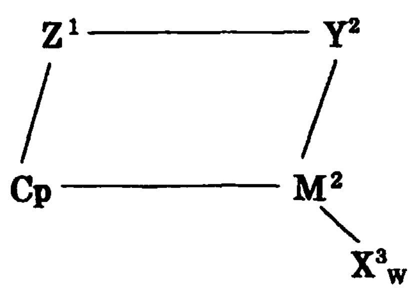

(III)

In the above formula, $M^2$ stands for a transition metal atom in the Group IVB of the periodic table, specifically titanium, zirconium or hafnium atom;

Cp stands for cyclic unsaturated hydrocarbon groups or chain unsaturated hydrocarbons groups such as a cyclopentadienyl group, a substituted cyclopentadienyl group, a indenyl group, a substituted indenyl group, a tetrahydroindenyl group, a substituted tetrahydroindenyl group, a fluorenyl group or a substituted fluorenyl group;
$X^3$ stands for hydrogen atom, halogen atom, an alkyl group having 1 to 20 carbon atoms, an aryl group, an alkylaryl group or an arylalkyl group having 6 to 20 carbon atoms, or an alkoxy group having 1 to 20 carbon atoms;
$Z^1$ stands for $SiR^7_2$, $CR^7_2$, $SiR^7_2SiR^7_2$, $CR^7_2CR^7_2$, $CR^7_2CR^7_2CR^7_2$, $CR^7$=$CR^7$, $CR^7_2SiR^7_2$ or $GeRR^7_2$; $Y^2$ stands for -N(R)-, -O-, -S- or -P($R^8$)-;
$R^7$ stands for alkyl, aryl, silyl, halogenated alkyl and halogenated aryl groups having hydrogen atom or up to 20 non-hydrogen atoms and a group selected from among combinations thereof;
$R^8$ stands for an alkyl group having 1 to 10 carbon atoms or an aryl group having 6 to 10 carbon atoms or may form a condensed ring system of one or more $R^7$'s and up 30 non-hydrogen atoms; and
w stands for 1 or 2.

Specific examples of the compounds represented by the aforementioned general formula (II) include (tert-butylamide)(tetramethyl-η5-cyclopentadienyl)-1,2-ethanediyl zirconium dichloride, (tert-butylamide)(tetramethyl-η5-cyclopentadienyl)-1,2-ethanediyl titanium dichloride, (methylamide)(tetramethyl-η5-cyclopentadienyl)-1,2-ethanediyl zirconium dichloride, (methylamide)(tetramethyl-η5-cyclopentadienyl)-1,2-ethanediyl titanium dichloride, (ethylamide)(tetramethyl-η5-cyclopentadienyl)-methylene titanium dichloride, (tert-butylamide)dimethyl(tetramethyl-η5-cyclopentadienyl)silane titanium dichloride, (tert-butylamide)dimethyl(tetramethyl-η5-cyclopentadienyl)silane zirconium dichloride, (benzylamide)dimethyl(tetramethyl-η5-cyclopentadienyl)silane titanium dichloride, and (phenyl phosphide)dimethyl(tetramethyl-η5-cyclopentadienyl)silane zirconium dibenzyl.

The (B-1) organic aluminiumoxy compound, (B-2) compound ($B^3$-2) forming ion pairs by reacting with the aforementioned transition metal compound (A-3), and (C) organoaluminum compound which are used in the olefin polymerization catalyst (4) are the same as the (B-1) organic aluminumoxy compound, (B-2)compound ($B^1$-2) forming ion pairs by reacting with the aforementioned transition metal compound (A-1), and (C) organoaluminum compound which are used in the aforementioned olefin polymerization catalyst (1).

The atactic olefin polymers such as propylene homopolymer can be manufactured by polymerizing an α-olefin such as propylene in the presence of such olefin polymerization catalyst (4).

In the polymerization, it is desirable that the transition metal compound (A-3) should be used in an amount of normally $10^{-8}$ to $10^{-3}$ grams atom/liter, preferably $10^{-7}$ to $10^{-4}$ grams atom/liter, as the concentration of the transition metal atom derived from the transition metal compound (A-3) in the polymerization system. In the case of using the organic aluminumoxy compound (B-1) for the activating compound (B), the atomic ratio (Al/transition metal) of the aluminum in the organic aluminumoxy compound (B-1) to the transition metal in the transition metal compound (A-3) is in a range of normally 5 to 10,000, preferably 10 to 5,000. In the case of using the ionized ionic compound ($B^2$-2) for activating compound (B), the molar ratio [(A-3)/($B^2$-2)] of the transition metal compound (A-3) to the ionized ionic compound ($B^2$-2) is in a range of normally 0.01 to 10, preferably 0.5 to 5. In the case of using the organoaluminum compound (C), the atomic ratio (Al/transition metal) of the aluminum in the organoaluminum compound (C) to the transition metal in the transition metal compound (A-3) is in a range of normally 5 to 10,000, preferably 10 to 5,000.

The solution-phase polymerization method is normally used in manufacturing atactic olefin polymers such as such propylene polymers. It is desirable that the polymerization temperature should be normally 0 to 250°C, preferably 20 to 200°C, and the polymerization pressure is normally atmospheric pressure to 100 kg/cm2, preferably atmospheric pressure to 50 kg/cm2.

The molecular weight of the atactic polymers thus obtained can be adjusted by causing hydrogen to be present in the polymerization system or changing polymerization temperature.

As the method for using at least two types of catalysts, there is a method in which at least one catalyst (Catalyst-1,2) selected from between the aforementioned polymerization catalyst (1) and the olefin polymerization catalyst (2) and at least one catalyst (Catalyst-3,4) selected from between the aforementioned polymerization catalyst (3) and the olefin polymerization catalyst (4) are used.

It is desirable that the ratio of Catalyst-1,2 to Catalyst 3,4 used in the polymerization should be in a range of 1/10,000 to 1/1, preferably 1/1,000 to 1/10 in terms of the atomic ratio (Catalyst-1,2/Catalyst-3,4) of a total of the transition metal atom in the olefin polymerization catalyst (1) used and the titanium atom in the olefin polymerization catalyst (2) used and a total of the transition metal atom in the olefin polymerization catalyst (3) used and the transition metal atom in the olefin polymerization catalyst (4) used.

In the case of manufacturing an olefin polymer composition by combining the olefin polymerization catalyst (1)

and at least one catalyst selected from between the olefin polymerization catalyst (3) and the olefin polymerization catalyst (4), it is desirable that the transition metal compounds should be used in a total amount of normally $10^{-8}$ to $10^{-3}$ grams atom/liter, preferably $10^{-7}$ to $10^{-4}$ grams atom/liter, as the concentration of the transition metal atoms derived from the transition metal compounds in the polymerization system. In the case of using the organic aluminumoxy compound (B-1) for the activating compound (B), the atomic ratio (Al/transition metals) of the aluminum in the organic aluminumoxy compound (B-1) to a total amount of the transition metals in the transition metals compound is in a range of normally 5 to 10,000, preferably 10 to 5,000. In the case of using the ionized ionic compound (B-2) as an activating compound (B), the molar ratio [transition metal compounds/(B-2)] of the total amount of the transition metal compounds to the ionized ionic compound (B-2) is in a range of normally 0.01 to 10, preferably 0.5 to 5. In the case of using the organoaluminum compound (C), the atomic ratio (Al/transition metals) of the aluminum in the organoaluminum compound (C) to a total amount of the transition metals in the transition metal compound is in a range of normally 5 to 10,000, preferably 10 to 5,000.

It is desirable that in the case of employing the slurry polymerization method, the polymerization temperature should be normally -50 to 100°C, preferably 0 to 90°C, and it is desirable that in the case of employing the gas-phase or bulk polymerization method, the polymerization temperature should be normally 0 to 120°C, preferably 20 to 100°C. Furthermore, the polymerization pressure is normally atmospheric pressure to 100 kg/cm2, preferably atmospheric pressure to 50 kg/cm2.

In the case of manufacturing an olefin polymer composition by combining the olefin polymerization catalyst (2) and at least one catalyst selected from between the olefin polymerization catalyst (3) and the olefin polymerization catalyst (4), it is desirable that the transition metal compounds and the solid-state titanium catalyst compound should be used in a amount of normally $10^{-8}$ to $10^{-3}$ grams atom/liter, preferably $10^{-7}$ to $10^{-4}$ grams atom/liter, as the total concentration of the transition metal atoms in the transition metal compounds and the titanium atom in the solid-state titanium catalyst component in the polymerization system. In the case of using the organic aluminumoxy compound (B-1) for the activating compound (B), the atomic ratio (Al/transition metals+Ti) of the aluminum in the organic aluminumoxy compound (B-1) to the transition metals in the transition metals compound and the titanium atom in the solid-state titanium catalyst component is in a range of normally 5 to 10,000, preferably 10 to 5,000. In the case of using the ionized ionic compound (B-2) as an activating compound (B), the molar ratio [transition metal compounds+Ti/(B-2)] of the total amount of the transition metal compounds and the solid-state titanium catalyst component to the ionized ionic compound (B-2) is in a range of normally 0.01 to 10, preferably 0.5 to 5. In the case of using the organoaluminum compound (C), the atomic ratio (Al/transition metals+Ti) of the aluminum in the organoaluminum compound (C) to a total amount of the transition metals in the transition metal compound and the titanium atom in the solid-state titanium catalyst component is in a range of normally 5 to 10,000, preferably 10 to 5,000.

It is desirable that in the case of employing the slurry polymerization method, the polymerization temperature should be normally -50 to 100°C, preferably 0 to 90°C, and it is desirable that in the case of employing the gas-phase or bulk polymerization method, the polymerization temperature should be normally 0 to 120°C, preferably 20 to 100°C. Furthermore, the polymerization pressure is normally atmospheric pressure to 100 kg/cm2, preferably atmospheric pressure to 50 kg/cm2.

In the case of manufacturing an olefin polymer composition by combining at least one catalyst selected from between the olefin polymerization catalyst (1) and the olefin polymerization catalyst (2) and at least one catalyst selected from between the olefin polymerization catalyst (3) and the olefin polymerization catalyst (4), the ratio between the atactic olefin polymer and non-atactic olefin polymer in the olefin polymer composition thus obtained can be adjusted by changing the ratio of the aforementioned catalyst components.

The olefin polymer compositions of the present invention may contain a softener, filler, pigment, stabilizer, plasticizer, flame retardant, lubricant, antistatic agent, agent for improving electrical properties, etc. to such extent that the objects of the present invention will not be adversely affected.

Specific examples of a filler include powder fillers represented by carbonates such as precipitated calcium carbonate, calcium carbonate heavy and magnesium carbonate; hydroxides such as aluminum hydroxide, magnesium hydroxide and magnesium oxide; oxides such as zinc oxide, zinc white and magnesium oxide; natural silicic acids or silicates such as kaolinite, calcined clay, pyrophyllite, sericite, (fine powder) talc and wollastonite; synthetic silicic acids or silicate such as calcium silicate hydrate, aluminum silicate hydrate, silicic acid hydrate and silicic acid anhydride; flake fillers such as mica; fibrous fillers such as sepiolite, PMF (Processed Mineral Fiber), zonotolite, potassium titanate, erestadite, basic magnesium sulfate whisker, calcium titanate whisker and aluminum borate whisker; balloon fillers such as glass balloon and fly ash balloon; and organic fillers such as high styrenes, lignin and regenerated rubber.

These filler are used in an amount of normally 1 to 100 parts by weight against 100 parts by weight of the olefin polymer composition.

EFFECT OF THE INVENTION

The atactic olefin polymers of the present invention have excellent optical and/or mechanical properties. They are used in various moldings singly by themselves or as modifiers for other thermoplastic resin. Furthermore, the atactic olefin polymers of the present invention provide those compositions having various modulus as well as excellent optical and/or mechanical properties when made up into compositions with non-atactic olefin polymers, particularly propylene polymer or crystalline butene polymer. Specifically, atactic polymers of butene, hexene and octene, out of the α-olefin polymers of the present invention, or copolymers thereof with other α-olefin can be used suitably as modifiers for crystalline polyolefins such as crystalline polypropylene, crystalline polybutene. In this case, a polymer of the present invention may preferably be used in an amount or 1 to 50 parts by weight, more preferably 5 to 50 parts by weight, against 100 parts by weight of a composition comprising a crystalline polyolefin and a polymer of the present invention. The blending of a polymer of the present invention in this range of ratio enables to give a crystalline polyolefin flexibility without impairing its inherent heat resistance, mechanical and other properties.

Moreover, the aforementioned olefin polymer compositions can be manufactured by a one-stage or not less than two-stage process using at least two types of catalysts.

The olefin polymer compositions of the present invention are used for various applications.

Other embodiments of the present invention include an α-olefin polymer having 4 to 10 carbon atoms such as poly-1-hexene and poly-1-octene, for example, and they are used suitably as a vibration insulation material.

As an example of the poly-α-olefin polymers of the present invention, there is a poly-α-olefin polymer which comprises a homopolymer of either one of 1-hexene or 1-octene and which has intrinsic viscosity [η] in a range of 0.5 to 10 dl/g and a degree of crystallinity of not more than 5%.

Specifically, out of the α-olefin polymers of the present invention, the polymers having a component derived from hexene or octene as the main component can be used suitably as a vibration insulation material or a material giving vibration insulation properties to other materials. Since these polymers shows a high value of loss tangent as observed by the determination of the dynamic viscoelasticity in a broad range of temperature, they exhibit good vibration insulation properties in a broad range of temperature.

Out of the α-olefin polymers of the present invention, the polymers having a component derived from hexene or octene as the main component can be used suitably as a tackifier. Since these polymers shows a high value of loss tangent as observed by the determination of the dynamic viscoelasticity in a broad range of temperature, they exhibit good tackiness in a broad range of temperature.

Furthermore, the atactic poly-4-methyl-1-pentene of the present invention is useful as a modifier for various film materials.

As an example of the 4-methyl-1-pentene polymers of the present invention, there is a poly-α-olefin polymer which has intrinsic viscosity [η] in a range of 0.5 to 10 dl/g and a degree of crystallinity of not more than 5%.

Freshness-retaining Film

For example, film made of polypropylene or low-density polyethylene cannot retain adequately the freshness of vegetables absorbing much carbon dioxide, oxygen gas and water vapor in summer time due to its poor carbon dioxide, oxygen gas or water vapor permeability.

The use of the atactic poly-4-methyl-1-pentene polymer resin of the present invention makes possible the provision of a fruit and vegetables packaging film that has excellent gas permeability and mechanical strength and is capable of adequately retaining the freshness of fruit and vegetables, while protecting them from fouling or damage. The aforementioned poly-4-methyl-1-pentene polymer resin may be blended with any of the 4-methyl-1-pentene polymer resins obtained by the conventional method known to the public, such as homopolymer of 4-methyl-1-pentene and copolymers of 4-methyl-1-pentene and 2 to 20 wt% of other α-olefin, such as a α-olefin having 3 to 18 carbon atoms, other than 4-methyl-1-pentene, such as 4-methyl-1-pentene/hexadecene copolymer and 4-methyl-1-pentene/decene-1 copolymer. In this case, the use of the atactic 4-methyl-1-pentene polymer resin of the present invention is preferable because the use of the resin result in an improvement in film strength, sealing properties and moldability. Preferable examples of the 4-methyl-1-pentene copolymer of the present invention for this application include 4-methyl-1-pentene (4MP1)/decene copolymer, 4-methyl-1-pentene (4MP1)/octene copolymer, 4-methyl-1-pentene (4MP1)/hexene copolymer and 4-methyl-1-pentene (4MP1)/ethylene copolymer. A preferable composition of these copolymers is such that the 4-methy-1-pentene content is 80 to 98 wt%. Especially, it is preferable that the 4MP1 content may be 90 to 95 wt%.

As the film containing the 4-methyl-1-pentene copolymer of the present invention, the following blends are preferable:

Non-atactic 4-methyl-1-pentene copolymer obtained by conventional technology (poly-4-methyl-1-pentene homopolymer, 4-methyl-1-pentene/decene copolymer, 4-methyl-1-pentene/octene copolymer, 4-methyl-1-pentene/ethylene copolymer)/atactic 4-methyl-1-pentene copolymer of the present invention = 30/70 to 90/10 (wt%); and the film

containing the 4-methyl-1-pentene copolymer of the present invention may contain other polymers such as low-density polyethylene (LDPE), linear polyethylene (LLDPE), polypropylene (PP), ethylene-propylene rubber (EPR), ethylene-butene rubber (EBR) and hydrogenated styrene-butadiene-styrene block copolymer (SEBS).

Surface Protection Film

The aforementioned atactic 4-methyl-1-pentene copolymer obtained by the present invention and the compositions containing the copolymer are also used suitably in the tacky layer of a surface protection film which will not peel off from the substrates when attached to various substrates, shows high initial tackiness and shows a slight change with time in tackiness after being attached to substrates, low level of blocking at the time of the unrolling of the film and excellent handling workability. The 4-methyl-1-pentene copolymer of the present invention has a low degree of crystallinity and shows especially excellent tackiness. Furthermore, the aforementioned tacky layer may contain other polymers such as ethylene-propylene rubber (EPR), ethylene-butene rubber (EBR) and styrene-butadiene-styrene block copolymer (SEBS) as required. Moreover, it may be blended with a modified material (maleic anhydride, styrene-grafted material) of such polymers as required.

Further, the manufacture of the film for this application may be carried out by any method that makes possible the manufacture of a laminated film of a structure having the substrate layer and the tacky layer. Especially the method in which a three-layer film having an intended thickness is manufactured by heating and melting separately each of the materials to be formed into the substrate (surface and middle layers) and the tacky layer and by coextruding them is preferable because the film of the present invention can be manufactured highly efficiently and inexpensively. Further, a method can also be employed in which the tacky layer is extruded onto the substrate to be laminated.

Vibration Insulation Material and Laminates Thereof

The atactic 4-methyl-pentene copolymer obtained by the present invention shows excellent viscoelastic properties and a high tan $\delta$ value in the vicinity of room temperature. Because of this, the atactic 4-methyl-pentene copolymer shows an excellent vibration insulation performance when used in the core or middle layer of a composite laminate for vibration insulation. The aforesaid 4-methyl-pentene copolymer may contain other polymers such as ethylene-propylene rubber (EPR), ethylene-butene rubber (EBR) and hydrogenated styrene-butadiene-styrene block copolymer (SEBS) as required. Moreover, it may be blended with a modified material (maleic anhydride, styrene-grafted material) of such polymers as required.

Examples of the vibration insulation laminates include such structures as ① metal/4-methyl-1-pentene copolymer, ② metal/4-methyl-1-pentene copolymer/metal, ③ metal/4-methyl-1-pentene copolymer/metal/4-methyl-1-pentene copolymer and ④ metal/4-methyl-1-pentene copolymer/metal/4-methyl-1-pentene copolymer/metal.

Out of these, the three-layer structure of ② above is used especially suitably. For the structure of such laminates, a board-like, cylindrical or other structure may be used. Examples of the metals formed such composite laminates include iron, steel, copper, aluminum, stainless steel and brass. The thickness of such metal is arbitrary but normally 0.1 to 2 mm, preferably 0.2 to 0.4 mm. Furthermore, the thickness of the composition layer is arbitrary but normally 0.02 to 3 mm, preferably 0.03 to 0.15 mm.

Soil Vinyl Chloride Resin Like Material

The atactic 4-methyl-pentene polymer of the present invention provides same material as soft vinyl chloride resin. Especially the aforementioned atactic 4-methyl-pentene copolymer provides a copolymer having excellent transparency, strain recovery properties and scratch resistance in a 4-methyl-pentene content range of not less than 90 mol %.

Examples of such polymers include 4-methyl-1-pentene/ethylene copolymer, 4-methyl-1-pentene/ethylene/hexene copolymer and 4-methyl-1-pentene/ethylene/octane copolymer. Such 4-methyl-1-pentene copolymers may contain other polymers such as ethylene-propylene rubber (EPR), ethylene-butene rubber (EBR) and hydrogenated styrene-butadiene-styrene block copolymer (SEBS) as required. It is possible to obtain such sheet, tube and bag as have a feel like soft vinyl chloride by using said copolymer which may be blended with a modified material (maleic anhydride, styrene-grafted material) of such polymers as required.. The tube formed by use of such copolymer has excellent kink resistance.

EXAMPLES

Given below is a more detailed description of the present invention, but the present invention is not limited to these examples described below.

Further, in the Examples below, the composition, physical properties, etc. of polymers were determined as described below.

Melt flow rate (MFR):
MFR was determined at 230°C and at a load of 2.16 kg in accordance with ASTM D1238-65T.
Polymer composition:
Approx. 200 mg of a polymer were dissolved uniformly in 1 ml of hexachlorobutadiene in a test tube 10 mm in diameter. The composition of the sample thus obtained was determined by making $^{13}$C-NMR spectrum measurement under the conditions: the measurement temperature 120°C, measurement frequency 25.02 Mhz, spectrum width 1,500 Hz, pulse repetition time 4.2 sec, and pulse width 6μsec.
Intrinsic viscosity [η]:
Intrinsic viscosity was measured in decahyronaphthalene at 135°C.
Flexural modulus (FM):
A FM test specimen punched out from a press-molded sheet 2 mm thick molded at 200°C was tested at 23°C at a span distance of 32 mm and a bending rate of 5 mm/min in accordance with ASTM D790.
Izod impact strength (IZ):
Isod impact strength was determined in accordance with ASTM D256.
Test specimen (notched):
12.7 mm wide x 6.4 mm thick x 64 mm long
Haze:
Haze of a press-molded sheet 0.5 mm thick molded at 200°C was determined in accordance with ASTM D1003.
Preliminary activation of catalyst:
13.5 mg of (dimethyl(t-butylamide)(tetramethyl-η5-cyclopentadienyl) silane) dichloridetitanium were weighed into a glass container previously purged thoroughly with nitrogen. 22.86 ml of toluene solution of methylalumoxane (hereinafter called "MAO") of 0.808 millimol/ml were added to the glass container so that the aluminum atom would be 22.05 millimols, and was subjected to ultrasonic treatment for 15 min. at 23°C to obtain a catalyst solution.

(Polymerization Example 1) Propylene-ethylene atactic copolymer:

900 ml of heptene was added at normal temperature to a 2L autoclave previously dried under reduced pressure and purged with nitrogen. After that, propylene was pressurized to 6 kg/cm2G with agitation, and pressure was released. This pressurization/pressure release operation was repeated three times. Subsequently, propylene was pressurized to 6.6 k/cm2G (25°C), 0.3 ml of toluene solution of triisobutylaluminum(1.0 millimol/ml) were added, and then the temperature was raised to 80°C. After that, the system was pressurized with ethylene to 8 kg/cm2G, and 0.5 ml of the toluene solution (0.001 millimols/ml) of (dimethyl(t-butylamide)(tetramethyl-η5-cyclopentadienyl) silane)dichloridetitanium synthesized by the method known to the public, 0.5 ml of the toluence solution (0.004 milimol/ml) of triphenylcarbenium tetra(pentafluorophenyl)borate and 10 ml of toluene were mixed for 10 min., and all of them were added simultaneously to initiate the copolymerization of propylene and ethylene. At this time, the catalyst concentration was such that against the total system, (dimethyl(t-butylamide)(tetramethyl-η5-cyclopentadienyl)silane)dichloridetitanium was 0.0005 millimol/liter and triphenylcarbeniumtetra(pentafluorophenyl)borate was 0.002 millimol/liter. During polymerization, the internal pressure was kept at 8 kg/cm2G by supplying ethylene continuously. After 25 min., the polymerization reaction was stopped by adding methylalcohol. After the pressure was released, the polymer solution was taken out and washed by using aqueous solution obtained by adding 5 ml of concentrated hydrochloric acid to 1 liter of water at a ratio of 1:1, and the catalyst residues were turned into a water phase. This catalyst-containing solution was allowed to stand so that the water phase was separated and removed. It was then washed with distilled water twice to separate this polymerization liquid into oil and water. Next, the polymer liquid which had been separated above was contacted with 3 fold acetone under vigorous agitation to precipitate the polymer. The precipitated polymer was washed adequately with acetone, and a solid portion (copolymer) was obtained by filtration. The solid portion was dried at 130°C and 350 mmHg for 12 hours in the flow of nitrogen. The amount of the propylene/ethylene copolymer thus obtained was 34 g. Its intrinsic viscosity [η] as determined in decalin 135°C was 1.4 dl/g; glass transition temperature Tg was -26°C; propylene content was 84 wt%, ethylene content was 16 wt%; and activity was 163 kg/millimol Ti • hr.
Furthermore, a chart shown in Fig. 1 was obtained by $^{13}$CNMR measurement.
Measurement conditions were as follows:

Diameter of test tube: 10 mm
Amount of sample: Approx. 250 milligrams

Solvent: Orthodichlorobenzene/benzene deuteride = 4/1(2.5 ml)
Observation width: Approx. 270 ppm
Measurement method: Proton fully decoupling
Pulse width: 45 degrees (7.5 μsec)
Pulse repetition time: 5.5 sec
Measurement temperature: 120°C
Times of computation: 16,384 times
Chemical soil standard: 21.59 ppm (the signal that appears in the lowest magnetic field out of the methyl signals of propylene)

The following was obtained from the $^{13}$CNMR chart obtained:

Total peak area in the first zone (21.1 to 21.9 ppm) = $P^1$;
Total peak area in the second zone (20.3 to 21.0 ppm) = $P^2$;
Total peak area in the third zone (19.5 to 20.3 ppm) = $P^3$; and
X and Y are defined by the formulas, $P^1/(P^1+P^2+P^3)=X$ and $P^3/(P^1+P^2+P^3)=Y$, respectively, wherein X = 10.5 and Y = 44.

Melt flow rate (MFR):
MFR was measured at 230°C and at a load of 2.16 kg in accordance with ASTM D1238-65T
Intrinsic viscosity [η]:
Intrinsic viscosity was measured in decahyronaphthalene at 135°C.
Izod impact strength (IZ):
Izod impact strength was determined in accordance with ASTM D256. (Test specimen (notched): 12.7 mm wide x 6.4 thick x 64 long)
Yield Modulus (YM):
Yield modulus was measured in accordance with ASTM D638.
Haze:
Haze of a press-molded sheet 0.5 mm thick molded at 200°C was determined in accordance with ASTM D1003.
Recovery properties:
Recovery was evaluated by visual inspection after pressing a fingernail against a test specimen 2 mm thick.

◎: No mark of the fingernail left
○ : A slight mark of the fingernail left
△: A conspicuous mark of the fingernail left
X: A very conspicuous mark of the fingernail left

Examples 1 and 2:

0.2 parts by weight of tetrakis[methylene-3-(3,5-di-t-butyl-4-hydroxyphenyl) propionate]methane as an antioxidant and 0.1 part by weight of calcium stearate as a hydrochloric acid absorber were added to a mixture of 10 parts by weight of a propylene copolymer (C2 content: 2 wt%; and C4 content: 1.1 wt%) and 90 parts by weight of an ethylene/propylene atactic copolymer [mr/(mm+rr) = 1.04, [η] = 1.4 dl/g and propylene content = 84 wt%] obtained as described in Polymerization Example 1; these were melted and mixed for 5 min. at 200°C and a rotary speed of 50 rpm by means of a 50-ml laboplastmill; and thus the intended composition was obtained.
In the same manner, a composition of homopolypropylene (MFR: 6 g/10 min.) and an ethylene/1-butene copolymer (ethylene content: 60 wt%; and [η]: 1.7 dl/g) was obtained.

Comparative Example 1

0.2 parts by weight of tetrakis[methylene-3-(3,5-di-t-butyl-4-hydroxyphenyl) propionate]methane as an antioxidant and 0.1 part by weight of calcium stearate as a hydrochloric acid absorber were added to a mixture of 10 parts by weight of a propylene copolymer (C2 content: 2 wt%; and C4 content: 1.1 wt%) and 90 parts by weight of an ethylene/propylene atactic copolymer [mr/(mm+rr) = 0.3, [η] = 2.0 dl/g and propylene content = 85 wt%]. These were melted and mixed for 5 min. at 200°C and a rotary speed of 50 rpm by means of a 50-ml laboplastmill; and thus the intended composition was obtained.

Comparative Example 2

0.2 parts by weight of tetrakis[methylene-3-(3,5-di-t-butyl-4-hydroxyphenyl) propionate]methane as an antioxidant and 0. 1 part by weight of calcium stearate as a hydrochloric acid absorber were added to a mixture of 60 parts by weight of homopolypropylene (MFR: 6 g/10 min), 10 parts by weight of ethylene/propylene/1-butene copolymer [mr/(mm+rr)=0.4,[η]= 1.5dl/g, ethylene content = 8 wt%, propylene content = 50 wt%] and 20 parts by weight of an ethylene/1-butene copolymer (ethylene content = 60 wt%; and [η] = 1.7 dl/g). These were melted and mixed for 5 min. at 200°C and a rotary speed of 50 rpm by means of a 50-ml laboplastmill; and thus the intended composition was obtained.

| tem | Example 1 | Example 2 |
|---|---|---|
| Propylene polymer | 10 | |
| Homopolypropylene | | 60 |
| Ethylene/propylene atactic copolymer | 90 | 10 |
| Ethylene/propylene copolymer | | |
| Ethylene/1-butene copolymer | | 30 |
| IZ(J/m) (23°C) | NB | NB |
| IZ(J/m) (-10°C) | NB | 370 |
| YM(Mpa) | 21 | 490 |
| Haze (%) | 7 | 39 |
| Scratch resistance | ◎ | ○ |

Example 3 (Atactic Polyoctene)

Manufacture of polyoctene:

A 1-liter glass vessel equipped with cooling tube and an agitator was purged adequately with nitrogen, charged with 279 ml of toluene and 100 ml of octene, and agitated, and then the temperature in the system was lowered to 0°C. 7.4 mg of (dimethyl(t-butylamide)(tetramethyl-η5-cyclopentadienyl) silane)titanium dichloride synthesized by a known was dissolved in 4 ml of a toluene solution of triisobutylaluminum (1 millimol/ml); and obtained solution was added to the above solvent mixture. After that, 20 ml of the toluence solution (0.002 millimol/ml) of triphenylcarbeniumtetra(pentafluorophenyl)borate were added, and the polymerization of octene was initiated. At this time, the catalyst concentration was such that against the total system, (dimethyl(t-butylamide) (tetramethyl-η5-cyclopentadienyl)silane)dichloridetitanium was 0.05 millimol/liter and triphenylcarbeniumtetra(pentafluorophenyl)borate was 0.1 millimol/liter. After 60 min., the polymerization reaction was stopped by adding methylalcohol. Then, the polymer solution was taken out and washed by using aqueous solution obtained by adding 5 ml of concentrated hydrochloric acid to 1 liter of water at a ratio of 1:1, and the catalyst residues were turned into a water phase. The liquid was allowed to stand so that the water phase was separated and removed. And then obtained liquid was washed with distilled water twice and allowed to stand so that the water phase was separated and removed. Next, the obtained polymer liquid was brought into contact under vigorous agitation with 3-fold acetone to precipitate the polymer. The precipitated polymer was washed adequately with acetone, and a solid portion (copolymer) was obtained by filtration. The solid portion was dried at 130°C and 350 mmHg for 12 hours in the flow of nitrogen. The amount of the polyoctene polymer thus obtained was 7.8 g. Its intrinsic viscosity [η] as determined in decalin 135°C was 1.3 dl/g; glass transition temperature Tg measured by DSC was -63°C; the peak of the loss tangent as determined by the measurement of dynamic viscoelasticity made at a frequency of 10 Hz was -39°C; the peak width at half height was 48°C; and activity was 520 g/millimol Ti • hr.

Furthermore, 20 parts by weight of the aforementioned atactic polyoctene were blended with 80 parts by weight of crystalline polypropylene (J700), and a composition was obtained by melting and mixing the blend for 5 min. at 200°C and a rotary speed of 100 rpm by means of a laboplastmill. The Izod impact strength of the resultant composition as measured in accordance with ASTM D785 was 52 J/m.

(Synthesis Example 4)

430 ml of heptene, 430 ml of 4-methyl-1-pentene and 140 ml of 1-butene were added at normal temperature to a 2-liter autoclave previously dried under reduced pressure and purged with nitrogen. After that, the autoclave was pressurized with propylene to 6 $kg/cm^2G$ under agitation, and pressure was released. This pressurization/pressure release operation was repeated three times. Subsequently, 0.3 ml of the toluene solution of 1.0 millimol/ml triisobutylaluminum were added at normal pressure, and then the temperature was raised to 50°C. And then the system was pressurized with propylene to 4.5 $kg/cm^2G$. 0.5 ml of the toluene solution (0.001 millimols/ml) of (dimethyl(t-butylamide)(tetramethyl-η5-cyclopentadienyl)silane)dichloridetitanium synthesized by the known method, 0.5 ml of the toluence solution (0.004 millimol/ml) of triphenylcarbeniumtetra(pentafluorophenyl)borate and 10 ml of toluene were mixed for 10 min., and all of the mixture were added to the system at the same time to initiate the copolymerization of propylene and ethylene. At this time, the catalyst concentration was such that against the total system, (dimethyl(t-butylamide)(tetramethyl-η5-cyclopentadienyl) silane)dichloridetitanium was 0.0005 millimol/liter and triphenylcarbenium tetra(pentafluorophenyl)borate was 0.002 millimol/liter. During polymerization, the internal pressure was kept at 4.5 kg/cm2G by supplying propylene continuously. After 30 min., the polymerization reaction was stopped by adding methylalcohol. After the pressure was released, the polymer solution was taken out and washed by using aqueous solution obtained by adding 5 ml of concentrated hydrochloric acid to 1 liter of water at a ratio of 1:1, and the catalyst residues were turned into a water phase. The mixed liquid was allowed to stand so that the water phase was separated and removed. The obtained liquid was then washed with distilled water twice and allowed to stand so that the water phase was separated and removed. Next, the polymer liquid thus was brought into contact under vigorous agitation with 3-fold acetone to precipitate the polymer. The precipitated polymer was washed adequately with acetone, and a solid portion (copolymer) was obtained by filtration. The solid portion was dried at 130°C and 350 mmHg for 12 hours in the flow of nitrogen. The amount of the propylene/1-butene/4-methyl-1-pentene copolymer thus obtained was 11 g. Its intrinsic viscosity [η] as determined in decalin 135°C was 1.2 dl/g; propylene content was 51 mol%, 1-butene content was 21 mol%; 4-methyl-1-pentene content was 28 mol%; and activity was 44 kg/millimol Ti • hr.

(Synthesis Example 5)

The same operations as described in Synthesis Example 3 were performed except that the pressure during the polymerization of propylene was changed to 2.5 $kg/cm^2G$. The amount of the propylene/1-butene/4-methyl-1-pentene copolymer thus obtained was 5.1 g. Its intrinsic viscosity [η] as determined in decalin 135°C was 1.1 dl/g; propylene content was 29 mol%, 1-butene content was 31 mol%; 4-methyl-1-pentene content was 40 mol%; and activity was 20 kg/millimol Ti • hr.

(Synthesis Example 6)

The same operations as described in Synthesis Example 3 were performed except that the pressure during the polymerization of propylene was changed to 1.5 $kg/cm^2G$; the amount of 1-butene was changed to 300 ml; the amount of 4-methyl-1-pentene was 200 ml; the amount of heptene was changed to 500 ml; and the temperature was changed to 50°C. The amount of the propylene/1-butene/4-methyl-1-pentene copolymer thus obtained was 1.4 g. Its intrinsic viscosity [η] as determined in decalin 135°C was 1.0 dl/g; propylene content was 22 mol%, 1-butene content was 59 mol%; 4-methyl-1-pentene content was 19 mol%; and activity was 5.6 kg/millimol Ti • hr.

Examples 4 to 6 (Surface Protection Film)

A 3-layer surface protection film (thickness: 50 μm) which consists of a surface substrate layer (thickness: 10 μm) made of a propylene homopolymer, a middle substrate layer (thickness: 30 μm) made of a propylene random polymer containing 3 mol% ethylene and a tacky layer (thickness: 10 μm) made of a copolymer containing propylene, 1-butene and 4-methyl-1-pentene having the mol percents shown in the table was formed by the coextrusion T-die molding method under the following conditions:

Molding conditions:

Surface substrate layer and middle substrate layer = 230°C
Tacky layer = 180°C
Coextrusion temperature = 230°C

Determination of initial tackiness:

The initial tackiness was determined in accordance with JIS Z0237 1991. The peeling strength as determined by the 180° peeling method was used as the index of tackiness.

Change with time under heated and pressurized conditions:

A test specimen was prepared by attaching a piece of surface protection film to stainless steel SUS304 in the same manner as described in the determination of initial tackiness properties. Aluminum foil 15 μm thick was paid on top of the surface protection film, and then a silicone rubber sheet 3 mm thick having a spring hardness of 70 Hs as specified in JIS K6301 was put on it. 2 $kg/cm^2$ of pressure was applied evenly to the area of the test specimen to the film had been attached at 60°C by means of a heating press. In this condition, the test specimen was kept for 240 hours and then removed from the heating press. The peeling strength was determined by the 180° peeling method and was used as the index of tackiness.

Paste residues:

The surface of the aforementioned test specimen on which peeling test had been conducted as described above was inspected visually. Any part of the tacky layer remaining on the surface of the test specimen as a result of the peeling-off of an area of the surface protection film not less than 1 mm in diameter was regarded as paste residues.

Table

| | Unit | Example 4 | Example 5 | Example 6 |
|---|---|---|---|---|
| Tacky layer component: | | | | |
| Propylene | mol% | 51 | 29 | 22 |
| 1-butene | mol% | 21 | 31 | 59 |
| 4MP1 | mol% | 28 | 40 | 19 |
| Crystallinity | % | 0 | 0 | 0 |
| Intrinsic viscosity | dl/g | 1.2 | 1.1 | 1.0 |
| Tacky properties: | | | | |
| Initial tackiness | g/25 mm | 80 | 30 | 110 |
| Tackiness after lapse of time from heating and pressure application | g/25 mm | 600 | 340 | 750 |
| Paste residues after lapse of time from heating and pressure application | Yen/no | No | No | No |

(Polymerization Example 7)

The same operations as described in Synthesis Example 3 were performed except that the pressure during the polymerization of propylene was changed to 1.5 $kg/cm^2G$; the amount of 1-butene was changed to 70 ml; the amount of 4-methyl-1-pentene was 930 ml without heptene; and the temperature was changed to 30°C. The amount of the propylene/1-butene/4-methyl-1-pentene copolymer thus obtained was 0.4g. Its intrinsic viscosity [η] as determined in decalin 135°C was 1.0 dl/g; propylene content was 22 mol%, 1-butene content was 11 mol%; 4-methyl-1-pentene content was 67 mol%; and activity was 1.6 kg/millimol Ti • hr.

(Polymerization Example 9)

The same operations as described in Synthesis Example 3 were performed except that the pressure during the polymerization of propylene was changed to 2.5 $kg/cm^2G$; the amount of 1-butene was changed to 300 ml; the amount of 4-methyl-1-pentene was 200 ml; the amount of heptene was changed to 500 ml; and the temperature was changed to 50°C. The amount of the propylene/1-butene/4-methyl-1-pentene copolymer thus obtained was 5.9 g. Its intrinsic viscosity [η] as determined in decalin 135°C was 1.1 dl/g; propylene content was 31 mol%, 1-butene content was 51 mol%; 4-methyl-1-pentene content was 18 mol%; and activity was 23.6 kg/millimol Ti • hr.

Examples 7 to 9 (Vibration Insulation Material)

Films 70 μm thick was obtained by molding the copolymers obtained as described in Polymerization Examples

7, 5 and 9 by the T-die film molding method. These films were put between two low carbon-content steel sheets 0.8 mm thick that had been subjected to treatment of degreasing with an alkali detergent and press-molded for 10 min. at 190°C. As a result, a vibration insulation board was obtained. Using the vibration insulation board thus obtained, the coefficient of vibration loss η was determined by the cautilever resonance point vibration decay method. The results of the determination are shown in the table below.

Table

| | Unit | Example 7 | Example 8 | Example 9 |
|---|---|---|---|---|
| Middle layer component: | | | | |
| Propylene | mol% | 22 | 29 | 31 |
| 1-butene | mol% | 11 | 31 | 51 |
| 4MP1 | mol% | 67 | 40 | 18 |
| Crystallinity | % | 0 | 0 | 0 |
| Intrinsic viscosity | dl/g | 1.0 | 1.1 | 1.1 |
| Tacky properties: | | | | |
| Vibration loss | 0°C | 0.01 | 0.07 | 0.16 |
| coefficient η | 20°C | 0.06 | 0.3 | 0.07 |
| | 40°C | 0.3 | 0.07 | 0.01 |

Industrial Utility

The present invention relates to a method for manufacturing atactic ethylene/α-olefin copolymers, atactic ethylene/propylene copolymers obtained therefrom, and compositions thereof and the method for manufacturing such compositions. More specifically, the present invention provides atactic ethylene/α-olefin copolymers having excellent optical properties, mechanical properties and/or film properties, and is suitable for method of manufacturing effectively the copolymers. Furthermore the present invention provides compositions of the copolymers and is suitable for manufacturing method of such compositions by a polymerization process.

## Claims

**1.** Copolymers comprising ethylene and propylene whose structural molar ratio (ethylene/propylene) is 1/99 to 20/80 and out of the spectra in the zone (19 to 23 ppm) obtained by C13NMR measurement of which the areas of the signals appearing in the first zone (21.1 to 21.9 ppm), second zone (20.3 to 21.0 ppm) and third zone (19.5 to 20.3 ppm) are represented by the total peak area in the first zone = $P^1$, the total peak area in the second zone = $P^2$ and the total peak area in the third zone = $P^3$, respectively, and X and Y are defined by the formulas, $P^1/(P^1+P^2+P^3)=X$ and $P^3/(P^1+P^2+P^3)=Y$, respectively, wherein X is $0<X<30$ and Y is $0<Y<53$.

**2.** A process for manufacturing the ethylene/α-olefin copolymers which comprises copolymering ethylene and α-olefin in the presence of a catalyst system comprising (a) shown below as the essential component and at least one compound selected from among (b) to (d).

(a) the transition metal complex expressed by the following formula(I):

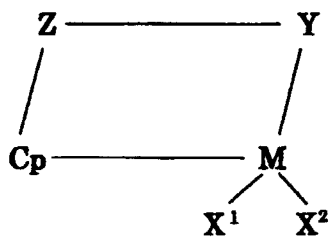

(I)

(wherein M stands for Ti • Zr • Hf, Cp stands for the cyclopentadienyl group, indenyl group, fluorenyl group or their derived groups π-bonded with M, $X^1$ and $X^2$ stands for an anionic ligand or a neutral Lewis base ligand, Y stands for a ligand containing nitrogen atom, oxygen atom, phosphor atom or sulfur atom, and Z stands for nitrogen atom, oxygen atom, silicon atom or one carbon atom.), or

The meso form of the transition metal compound represented by the following formula(II):

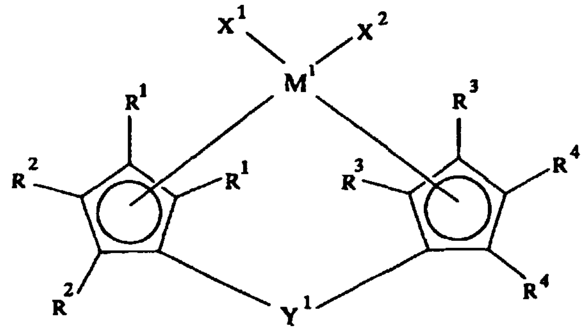

(II)

(wherein $M^1$ stands for a transition metal atom in the Group IV to VIB of the periodic table; $R^1$, $R^2$, $R^3$ and $R^4$, which may be the same or different from one another, stand for a hydrocarbon group having 1 to 20 carbon atoms, a halogenated hydrocarbon group having 1 to 20 carbon atoms, a silicon-containing group, an oxygen-containing group, a sulfur-containing group, a nitrogen-containing group, phosphor-containing group, hydrogen atom or halogen atom, and parts of the mutually adjacent groups may be bonded to form a ring together with the carbon atoms bonded by these groups; $X^1$ and $X^2$, which may be the same or different from one another, stand for a hydrocarbon group, a halogenated hydrocarbon group, an oxygen-containing group, a sulfur-containing group, a silicon-containing group, hydrogen atom or halogen atom; and $Y^1$ stands for a bivalent hydrocarbon group, a bivalent halogenated hydrocarbon group, a bivalent silicon-containing group, a bivalent germanium-containing group, a bivalent tin-containing group, -O-, -CO-, -S-, -SO-, $-SO_2-$, -Ge-, -Sn-, $-NR^5-$, $-P(R^5)-$, $-P(O)(R^5)-$, $-BR^5-$ or $-AlR^5-$ [however, $R^5$ may be the same or different from one another and stands for hydrogen atom, halogen atom, a hydrocarbon group, a halogenated hydrocarbon group or an alkoxy group].

(b) a compound which reacts with the transition metal M in the component (a) to form an ionic complex.

(c) an organoaluminum compound.

(d) alumoxan.

**3.** A process as defined in Claim 2 which comprises manufacturing copolymers whose crystallinity is not more than 5 % and whose structural molar ratio (ethylene/α-olefin) is 40/60 to 1/99 by polymerizing ethylene and one or more α-olefin monomers having 3 to 10 carbon atoms.

**4.** A process for manufacturing copolymers as defined in Claim 3 wherein the α-olefin is selected from propylene, butene and 4-methyl-1-pentene and the structural molar ratio (ethylene/α-olefin) of the copolymers is 1/99 to 20/80.

**5.** A process for manufacturing copolymers as defined in Claim 3 wherein the α-olefin is a combination of an α-olefin monomer (A) having 3 to 10 carbon atoms and another α-olefin monomer(B), other than (A), having 3 to 10 carbon atoms and the structural molar ratio [(ethylene+A)/B] of the copolymers is 40/60 to 1/99.

**6.** A process for manufacturing copolymers as defined in Claim 4 wherein the α-olefin (A) is propylene, α-olefin

monomer(B) is 4-methyl-1-pentene, and the structural molar ratio [(ethylene+propylene)/4-methyl-1-pentene] of the copolymers is 1/99 to 20/80.

**7.** A process for manufacturing copolymers as defined in Claim 4 wherein the α-olefin (A) is propylene, α-olefin monomer(B) is 1-butene, the structural molar ratio [(ethylene+propylene)/1-butene] of the copolymers is 1/99 to 20/80.

**8.** Propylene polymer compositions comprising 5 to 80 wt% of the ethylene/propylene copolymer as defined in Claim 1, 10 to 80 wt% of a crystalline propylene polymer, and as required 10 to 80 wt% of elastomer (The total of the ethylene/propylene copolymer, the crystalline propylene polymer and the elastomer is 100 wt%).

**10.** A process for manufacturing the propylene polymer compositions as defined in Claim 8 wherein such propylene polymer compositions are manufactured by polymerizing ethylene and propylene or ethylene, propylene and another α-olefin by a one-stage or multi-stageprpcess using at least two types of catalysts.

**11.** A process for manufacturing the propylene polymer compositions as defined in Claim 11 wherein the at least two catalysts is at least one catalyst selected from the α-olefin polymerization catalyst (1) mentioned below and the α-olefin polymerization catalyst (2) mentioned below and at least one catalyst selected from the α-olefin polymerization catalyst (3) mentioned below and the α-olefin polymerization catalyst (4) mentioned below.
Olefin polymerization catalyst (1):
A catalyst comprising:

(A)A racemic form of a transition metal compound (A-1) represented by the following formula (II):

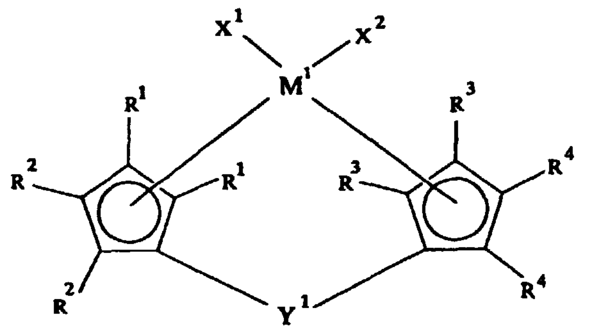

(II)

(wherein $M^1$ stands for a transition metal atom in the Group IV to VIB of the periodic table; $R^1$, $R^2$, $R^3$ and $R^4$, which may be the same or different from one another, stand for a hydrocarbon group having 1 to 20 carbon atoms, a halogenated hydrocarbon group having 1 to 20 carbon atoms, a silicon-containing group, an oxygen-containing group, a sulfur-containing group, a nitrogen-containing group, phosphor-containing group, hydrogen atom or halogen atom, and parts of the mutually adjacent groups may be bonded to form a ring together with the carbon atoms bonded by these groups; $X^1$ and $X^2$, which may be the same or different from one another, stand for a hydrocarbon group, a halogenated hydrocarbon group, an oxygen-containing group, a sulfur-containing group, a silicon-containing group, hydrogen atom or halogen atom; and $Y^1$ stands for a bivalent hydrocarbon group, a bivalent halogenated hydrocarbon group, a bivalent silicon-containing group, a bivalent germanium-containing group, a bivalent tin-containing group, -O-, -CO-, -S-, -SO-, $-SO_2-$, -Ge-, -Sn-, $-NR^5-$, $-P(R^5)-$, $-P(O)(R^5)-$, $-BR^5-$ or $-A1R^5-$ [however, R5 may be the same or different from one another and stands for hydrogen atom, halogen atom, a hydrocarbon group, a halogenated hydrocarbon group or an alkoxy group];
(B)

(B-1) an organic aluminumoxy compound and/or
(B-2) a compound ($B^1$-2) which reacts with the aforementioned transition metal compound (A-1) to form an ion pair;

and as required,
(C)an organoaluminum compound.

Olefin polymerization catalyst (2):
A catalyst comprising:

(A) solid-state titanium catalyst component (T) containing magnesium, titanium, halogen and an electron donor as the essential components;
(B) organometallic catalyst component (Q);
and
(C) silicon compound (S) represented by the following formula (i) or a compound (E) having not less than 2 ether linkages existing via two or more atoms:

$$Rp_n\text{-Si-}(ORq)_{4-n} \qquad (i)$$

(wherein n is 1, 2 or 3; when n is 1, Rp stands for a secondary or tertiary hydrocarbon group; when n is 2 or 3, at least 1 of Rp's stands for a secondary or tertiary hydrocarbon group, with the rest of Rp's being hydrocarbon groups, and two or more Rp's may be the same or different; Rq is a hydrocarbon group having 1 to 4 carbon atoms, and when 4-n is 2 or 3, Rq may be the same or different.)

Olefin polymerization catalyst (3):
A catalyst comprising

(A) a meso form of a transition metal compound (A-2) represented by the aforementioned formula (I);
(B)

(B-1) an organic aluminumoxy compound or
(B-2) a compound ($B^2$-2) which reacts with the aforementioned transition metal compound (A-2) to form an ion pair;

and as required,
(C) an organoaluminum compound.

Olefin polymerization catalyst (4):
A catalyst comprising:

(A) a racemic form of a transition metal compound (A-3) represented by the following formula (III):

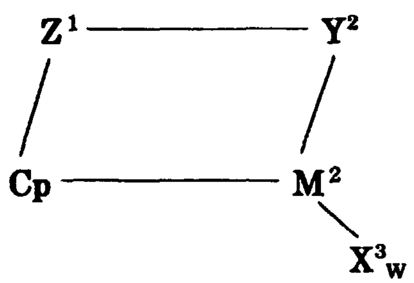

(III)

(wherein $M^2$ stands for a transition metal atom in the Group VIB of the periodic table; Cp stands for a cyclic unsaturated hydrocarbon group or a chain unsaturated hydrocarbon group; $X^3$ stands for hydrogen atom, halogen atom, a hydrocarbon group having 1 to 20 carbon atoms or an alkoxy group having 1 to 20 carbon atoms; $Z^1$ stands for $SiR^7_2$, $CR^7_2$, $SiR^7_2$ $SiR^7_2$, $CR^7_2CR^7_2$, $CR^7_2CR^7_2CR^7_2$, $CR^7{=}CR^7$, $CR^7_2SiR^7_2$ or $GeRR^7_2$; $Y^2$ stands for $-N(R^8)-$, -O-, -S- or $-P(R^8)-$; $R^7$ stands for hydrogen atom or an alkyl, aryl, silyl, halogenated alkyl and halogenated aryl groups having up to 20 non-hydrogen atoms and a group selected from among combinations thereof; $R^8$ stands for an alkyl group having 1 to 10 carbon atoms or an aryl group having 6 to 10 carbon atoms or may form a condensed ring system of one or more $R^7$'s and up 30 non-hydrogen atoms; and w stands for 1 or 2);
(B)

(B-1) an organic aluminumoxy compound or

(B-1) a compound ($B^3$-2) which reacts with the aforementioned transition metal compound (A-3) to form an ion pair;

and as required,
(C) an organoaluminum compound.

**12.** A vibration insulation material which comprises either one of the homopolymers of 1-hexene or 1-octene and whose degree of crystallinity is not more than 5%.

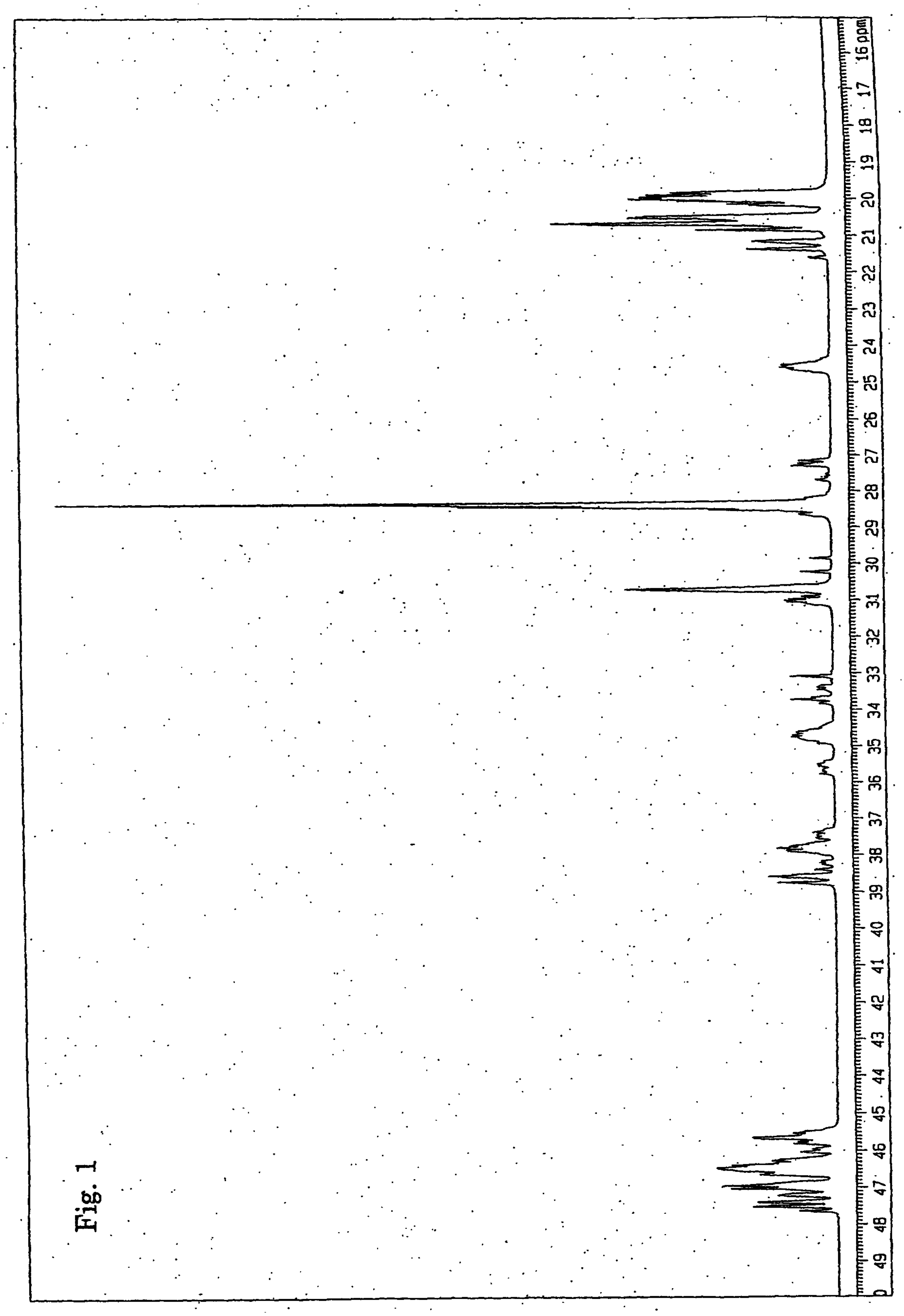
16 ppm
17
18
19
20
21
22
23
24
25
26
27
28
29
30
31
32
33
34
35
36
37
38
39
40
41
42
43
44
45
46
47
48
49

Fig. 1

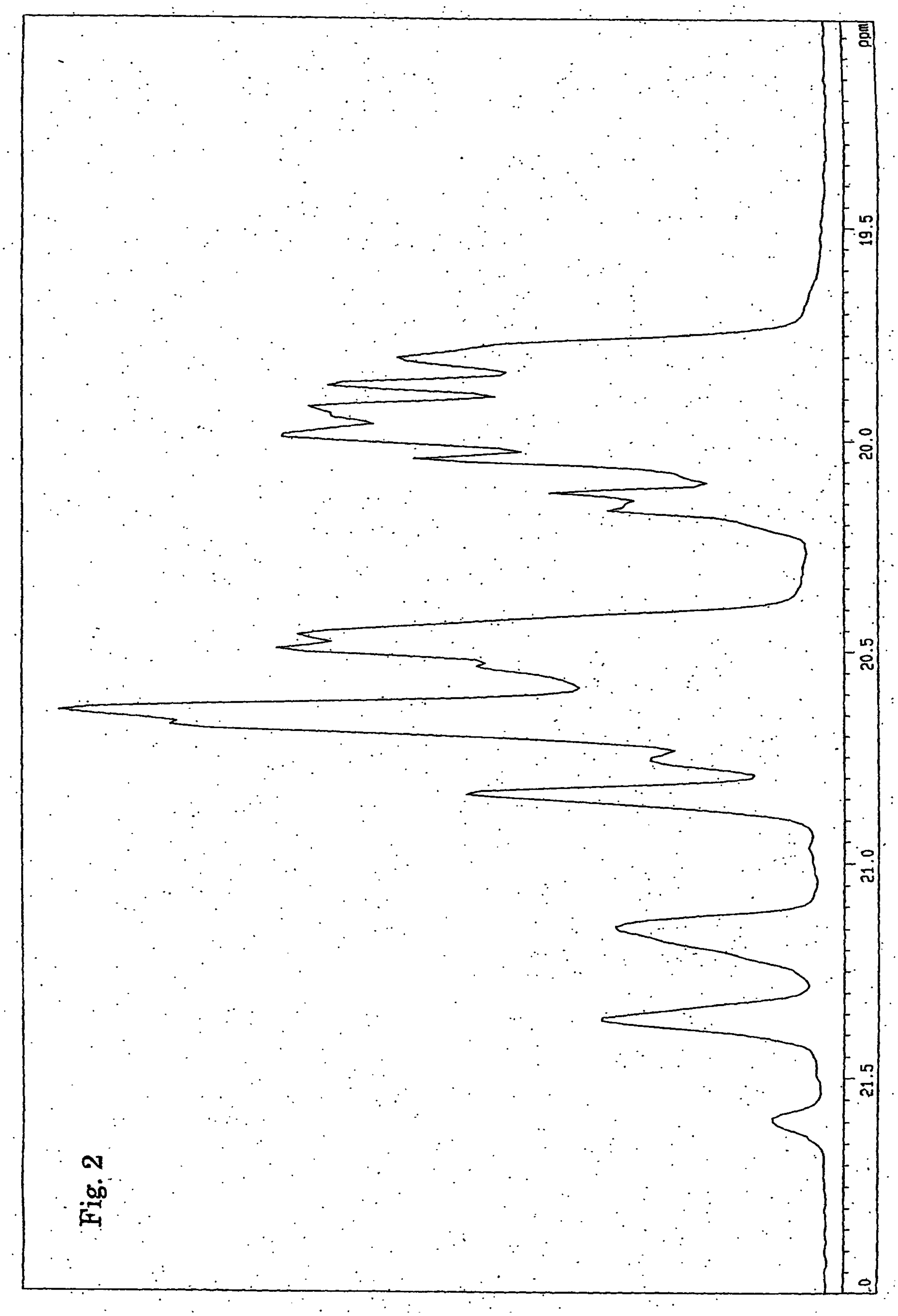


Fig. 2

**INTERNATIONAL SEARCH REPORT**

International application No.
PCT/JP98/03261

A. CLASSIFICATION OF SUBJECT MATTER
Int.Cl[6] C08F210/06, 4/642, 210/02, 110/14, C08L23/10, F16F15/02

According to International Patent Classification (IPC) or to both national classification and IPC

B. FIELDS SEARCHED

Minimum documentation searched (classification system followed by classification symbols)
Int.Cl[6] C08F4/60-4/70, 10/00-10/14, 110/00-110/14, 210/00-210/18, C08L23/00-23/36, F16F15/02

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 06-157662, A (Hoechst AG.), 7 June, 1994 (07. 06. 94), Claims ; Par. Nos. [0053] to [0068] & EP, 584609, A2 & CA, 2104036, A & US, 5672668, A & US, 5693836, A | 1-8 |
| PA | JP, 10-087713, A (Japan Polyolefins Co., Ltd.), 7 April, 1998 (07. 04. 98), Claims ; Par. Nos. [0011] to [0072] (Family: none) | 8-10 |
| X | JP, 03-163088, A (The Dow Chemical Co.), 15 July, 1991 (15. 07. 91), Claims ; page 9, lower left column, line 11 to lower right column, line 6 ; page 11, lower left column, line 14 to page 14, upper left column, line 7 ; page 23, lower left column, line 12 to page 24, upper left column, line 15 & EP, 416815, A & CA, 2024333, A | 2-7 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 October, 1998 (12. 10. 98) | 20 October, 1998 (20. 10. 98) |
| Name and mailing address of the ISA/ Japanese Patent Office | Authorized officer |
| Facsimile No. | Telephone No. |

Form PCT/ISA/210 (second sheet) (July 1992)

INTERNATIONAL SEARCH REPORT

International application No.
PCT/JP98/03261

C (Continuation). DOCUMENTS CONSIDERED TO BE RELEVANT

| Category* | Citation of document, with indication, where appropriate, of the relevant passages | Relevant to claim No. |
|---|---|---|
| X | JP, 07-505912, A (Exxon Chemical Patents Inc.), 29 June, 1995 (29. 06. 95), Claims ; page 5, upper left column, line 2 to lower left column, line 20 ; page 6, lower right column, line 19 to page 9, lower left column, line 16 ; page 10, upper right column, line 19 to page 11 & WO, 9321242, A1 & EP, 641362, A1 & US, 5444145, A | 2-7 |
| A | JP, 05-239287, A (Ube Rexene Corp.), 17 September, 1993 (17. 09. 93), Claims ; Par. Nos. [0011] to [0016] (Family: none) | 11 |

Form PCT/ISA/210 (continuation of second sheet) (July 1992)